# EUROPEAN PATENT SPECIFICATION

(11) **EP 4 256 944 B1**
(45) Date of publication and mention of the grant of the patent: **10.09.2025**
(21) Application number: 23161511.3
(22) Date of filing: 13.03.2023
(51) Int. Cl.: A01D 41/14

(54) **SYSTEMS AND METHODS FOR PREDICTIVE CUTTING TABLE CONTROL**
SYSTEME UND VERFAHREN ZUR PRÄDIKTIVEN SCHNEIDTISCHSTEUERUNG
SYSTÈMES ET PROCÉDÉS DE COMMANDE PRÉDICTIVE DE TABLE DE COUPE

(30) Priority: 06.04.2022 US 202263327963 P
(43) Date of publication of application: 11.10.2023
(73) Proprietor: Deere & Company, Moline, IL 61265 (US)
(72) Inventor: Vandike, Nathan R., Mannheim (DE); Bomleny, Duane M., Mannheim (DE)
(74) Representative: Holst, Sönke

(56) References cited:
- EP-A1- 3 430 881
- EP-A1- 3 598 886

## Description

The present description relates agricultural harvesters. More particularly, the present description relates to predictively controlling the cutting table position on a head of an agricultural harvester.

### BACKGROUND

There are several different types of agricultural harvesters. One type of agricultural harvester is a combine harvester which can have different heads attached to harvest different types of crops.

In one example, a cutter head can be attached to a combine harvester in order to harvest crop. A cutter head includes a cutter bar, a reel disposed above the cutter bar, and a cross conveyer (e.g., a cross auger) which delivers cut crop material to a feeder house. The reel engages crop and transports it rearward such that it can be cut by the cutter bar and engaged by the cross conveyer. The reel includes a number of reel arms to each of which a plurality of reel finger carriers are coupled. The reel finger carriers each carry a reel finger. The reel fingers engage and feed the crop rearward. The cutter bar, in some examples, is coupled to or disposed on the end of an actuatable (e.g., extendable and retractable) cutting table.

EP 3 430 881 A1 describes a control of height and cutting table length a platform for a combine harvester based on the height of the plants. If the plants are standing, the cutting table length is adjusted to correspond to the difference between the plant height and the cutting height. In case of downed crop, the table length depends on the crop orientation.

EP 3 598 886 A1 shows a combine harvester header height control with a high cutting mode in which the cutting table is moved on a height over ground to cut only the ears off the crop, thus in a desired height below the ears.

EP 3 403 485 A1 describes an automatic reel control based on crop height and learned relationship between crop height and reel position input by an operator.

### SUMMARY

The present invention is defined by the claims.

An agricultural system that obtains a crop height value indicative of a height of crop at a field and a cut height value indicative of a height of a cutter above a surface of the field. The agricultural system further obtains a relationship that generates a value indicative of a cutting table position based on the crop height value and the cut height value. The agricultural system generates a control signal to drive movement of a cutting table of an agricultural harvester based on the value indicative of the cutting table position.

The present invention relates to using in-situ data taken concurrently with an operation, namely in-situ crop height data and in-situ cutting height data. A relationship is identified. The agricultural harvester is then controlled based on the in-situ data and the relationship, and a position of the cutting table is controlled.

In one example, the present description relates to using in-situ data taken concurrently with an operation, in combination with prior or predicted data, such as prior or predicted data represented in a map.

In one example, the agricultural harvester is controlled based on the in-situ data and the prior or predicted data, such as prior or predicted data represented in a map.

In one example, the in-situ data is used in combination with the prior or predicted data represented in a map to generate a predictive model and a predictive map, such as a predictive crop height model and predictive crop height map or a predictive cutting table control input model and a predictive cutting table control input map. In some examples, the predictive crop height map or the predictive cutting table control input map, or both, can be used to control a mobile machine.

As discussed above, agricultural harvesting machines, such as combine harvesters, can be attached to different types of heads for harvesting different types of crops. One such head is a cutter head that includes, among other things, a cutter bar, a reel disposed above the cutter bar, and a cross conveyer, such as a cross auger. The reel engages crop at the field and draws it rearwards, towards cutter bar such that the crop is severed at a cut height. The cut crop is carried further by the reel towards the cross auger which delivers the cut crop to a centrally disposed feeder house.

The cutter bar can be attached or disposed on an actuatable cutting table that can be controllably actuated (e.g., extended and retracted), to various positions, such as various positions in the fore and aft directions. Thus, the relative fore-to-aft distance between the cutter bar and the reel can be varied. As the characteristics at the field, such as the crop height, vary, the performance of the agricultural harvester may also vary if operating parameters are not varied with the characteristics of the field. For example, performance of the agricultural harvester may suffer where the cutting table is not adjusted to account for the variance in characteristics at the field, such as variance in crop height. Ideally, in one example, it is desirable to have the top of every crop plant hit the header at the same point. However, with different crop heights, this will not be the case. Thus, the cutting table is adjusted fore-to-aft to account for the variance in crop height such that the crops substantially hit the same point on the header. However, the cutting height of the header must also be accounted for. Thus, the systems and methods herein may determine an intake crop height, that is the length of the crop plant, after being cut, that is gathered into the header. The intake crop height can be derived from the crop height (indicating the top of the crop) and the cut height (indicating the height at which the crop is cut).

In one example, the present description relates to obtaining a map such as a vegetative index map. The vegetative index map includes geolocated vegetative index values across different geographic locations at a field of interest. Vegetative index values may be indicative of vegetative growth or vegetation health, or both. One example of a vegetative index includes a normalized difference vegetation index (NDVI). There are many other vegetative indices that are within the scope of the present disclosure. In some examples, a vegetative index may be derived from sensor readings of one or more bands of electromagnetic radiation reflected by the plants. Without limitations, these bands may be in the microwave, infrared, visible, or ultraviolet portions of the electromagnetic spectrum. A vegetative index map can be used to identify the presence and location of vegetation (e.g., crop, weeds, etc.). A vegetative index map can be generated in a variety of other ways.

In one example, the present description relates to obtaining a map such as a crop height map. The crop height map includes geolocated crop height values across different geographic locations at a field of interest. The crop height map may be derived from sensor readings taken during a prior operation, performed by a machine, at the field of interest (e.g., a prior spraying operation) or taken during an aerial survey of the field of interest (e.g., drone survey, plane survey, satellite survey, etc.). These machines may be outfitted with one or more different types of sensors, such as imaging systems (e.g., cameras), optical sensors, lidar, radar, ultrasonic sensors, as well as sensors that detect one or more bands of electromagnetic radiation reflected by the plants on the field of interest. In some examples, the crop height map may be a predictive crop height map. In some examples, the crop height map may be a historical crop heigh map, such as a historical crop height map that maps crop height values from a previous year or an aggregated values of historical crop heights from previous years. In some examples, the crop height map may be derived from sensor readings or other survey of the field from earlier in the same year. These are merely some examples. The crop height map can be generated in a variety of other ways.

In one example, the present description relates to obtaining a map such as a seeding map. A seeding map includes geolocated values of seeding characteristic across different locations at a field of interest. Seeding characteristics include such variables as plant location, plant population, plant spacing, row spacing, row location, as well as various other characteristics. The seeding map may derived from sensor readings taken during a prior planting operation, performed by a planting machine at the field of interest. These planting machines may be outfitted with one or more different types of sensors that detect the various seeding characteristics. In other examples, the seeding map may be a prescribed seeding map. In other example, the seed characteristics may be derived from operator or user input. These are merely some examples. The seeding map can be generated in a variety of other ways.

In one example, the present description relates to obtaining a map such as a genotype map. The genotype map includes geolocated values of crop genotype across different locations at a field of interest. The genotype values may indicate genotype information for the crop at the field, for instance, in a crop field, there may be several different types (e.g., hybrids, cultivar, etc.) of crop plants. The genotype map may be derived from operator or user inputs that indicate the crop genotype information at different areas of the field. The genotype map may be derived from information, including sensor readings, from a planting operation occurring on the field earlier in the year. For instance, the planting machine (e.g., planter, seeder, etc.) may have data, including sensor data, that indicates the genotype of seed planted and the locations at which the seeds were planted. These are merely some examples. The genotype map can be generated in a variety of other ways.

In one example, the present description relates to obtaining in-situ data from in-situ sensors on the mobile agricultural machine (e.g., agricultural harvester) taken concurrently with an operation. The in-situ sensor data can include crop height data generated by crop height sensors. The in-situ sensor data can include header or cut height data generated by header/cut height sensors. In other example, the in-situ sensor data can include in-situ control input data generated by in-situ control input sensors. The various in-situ data is derived from various in-situ sensors on the mobile machine, as will be described in further detail herein. These are merely some examples of the in-situ data and in-situ sensors contemplated herein.

The present discussion proceeds, in some examples, with respect to systems that obtain one or more maps of a field and also use an in-situ sensor to detect a variable indicative of an agricultural characteristic value, such as crop height values. The systems generate a model that models a relationship between the values on the obtained map(s) and the output values from the in-situ sensor. The model is used to generate a predictive map that predicts agricultural characteristic values, such as such as crop height values. The predictive map, generated during an operation, can be presented to an operator or other user or used in automatically controlling a mobile agricultural machine during an operation or both.

The present discussion proceeds, in some examples, with respect to systems that obtain one or more maps of a field and also use in-situ sensors to detect a variable indicative of agricultural characteristic values, such as cutting table control input values and cut height values. The systems generate a model that models a relationship between the values on the obtained map(s), the cut height values, and the cutting table control input values. The model is used to generate a predictive map that predicts agricultural characteristic values, such as such as cutting table control input values. The predictive map, generated during an operation, can be presented to an operator or other user or used in automatically controlling a mobile agricultural machine during an operation or both.

The present discussion proceeds in some examples, with respect to systems that model a relationship between crop height values, cut height values, and cutting table control input values. The model is used to generate a predictive map that maps predictive agricultural characteristic values, such as cutting table control input values. The predictive map, generated during an operation, can be presented to an operator or other user or used in automatically controlling a mobile agricultural machine during an operation or both.

### BRIEF DESCRIPTION OF THE DRAWINGS

FIG. 1 is a partial pictorial, partial schematic illustration of one example of an agricultural harvester.
FIG. 2 is perspective view showing some portions of the header of the agricultural harvester shown in FIG. 1
FIG. 3 is a perspective view showing some portions of the header of the agricultural harvester shown in FIG. 1.
FIG. 4 is a block diagram showing some portions of an agricultural harvesting system, including an agricultural harvester, in more detail, according to some examples of the present disclosure.
FIG. 5 is a block diagram showing some portions of an agricultural harvesting system, in more detail, according to some examples of the present disclosure.
FIGS. 6A-6B (collectively referred to herein as FIG. 6) show a flow diagram illustrating one example of operation of an agricultural harvesting system in generating a map.
FIG. 7 is a block diagram showing some portions of an agricultural harvesting system, in more detail, according to some examples of the present disclosure.
FIGS. 8A-8B (collectively referred to herein as FIG. 8) show a flow diagram illustrating one example of operation of an agricultural harvesting system in generating a map.
FIG. 9 is a block diagram showing some portions of an agricultural harvesting system, in more detail, according to some examples of the present disclosure.
FIG. 10 shows a flow diagram illustrating one example of operation of an agricultural harvesting system in generating a model.
FIG. 11 shows a flow diagram illustrating one example of operation of an agricultural harvesting system in controlling an agricultural harvester.
FIG. 12 shows a flow diagram illustrating one example of operation of an agricultural harvesting system in controlling an agricultural harvester.
FIG. 13 is a block diagram showing one example of an agricultural harvester in communication with a remote server environment.
FIGS. 14-16 show examples of mobile devices that can be used in an agricultural harvester.
FIG. 17 is a block diagram showing one example of a computing environment that can be used in an agricultural harvester.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

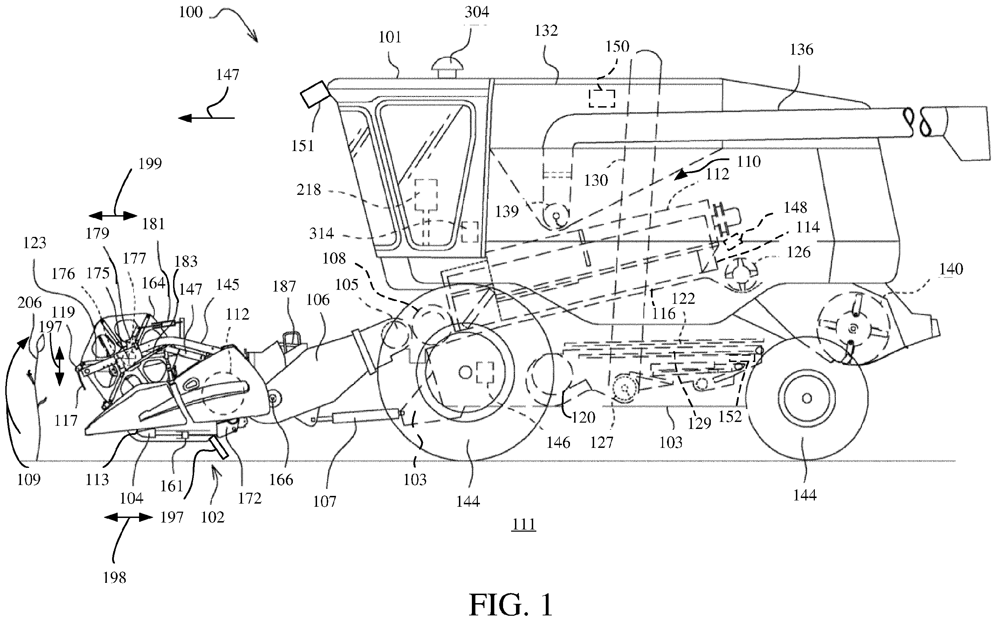

FIG. 1 is a partial pictorial, partial schematic illustration of a self-propelled agricultural harvester 100. In the illustrated example, agricultural harvester 100 is a combine harvester.

As shown in FIG. 1, agricultural harvester 100 illustratively includes an operator compartment 101, which can have a variety of different operator interface mechanisms 218 for controlling agricultural harvester 100. Agricultural harvester 100 can also include a control system 314 for generating various control signals to control items of agricultural harvester 100. Agricultural harvester 100 includes front-end equipment, such as a header 102, and a cutter (cutter bar) generally indicated at 113. In the illustrated example, the cutter 113 coupled to an actuatable cutting table 104. Cutter 113 and cutting table 104 extends across a width of the header 102. Agricultural harvester 100 also includes a feeder house 106, a feed accelerator 108, and a thresher generally indicated at 110. Agricultural harvester 100 also includes cross conveyor 112, such as a cross auger or a conveyor belt, that transfers crop material cut by the cutter 104 to the middle of header 102 and towards feeder house 106. Header 102 is pivotally coupled to a frame 103 of agricultural harvester 100 along pivot axis 105. One or more actuators 107 drive movement of header 102 about axis 105 in the direction generally indicated by arrow 109. Thus, a vertical position of header 102 (the header height) above ground 111 over which the header 102 travels is controllable by actuating actuator 107. Agricultural harvester 100 may also include one or more actuators 187 that operate to apply a tilt angle, a roll angle, or both to the header 102 or portions of header 102. Tilt refers to an angle at which the cutter 104 engages the crop. The tilt angle is increased, for example, by controlling header 102 to point a distal edge 113 of cutter 104 more toward the ground 111. The tilt angle is decreased by controlling header 102 to point the distal edge 113 of cutter 104 more away from the ground 111. The roll angle refers to the orientation of header 102 about the front-to-back longitudinal axis of agricultural harvester 100.

Additionally, agricultural harvester 100 also includes one or more cutting table actuators 161 that can be controlled to actuate movement of the cutting table 104, and thus the cutter 113, to control a depth of the cutting table, and thus, the fore-to-aft position of the cutter 113 relative to the reel 164. Cutting table actuators 161 drive movement of the cutting table 104, and thus the cutter 113, fore-to-aft, that is, in the directions generally indicated by arrow 198. The one or more cutting table actuators can be a variety of different types of actuators, such as hydraulic cylinders, pneumatic actuators, electric actuators, as well as various other types of actuators.

The reel 164 is coupled to the header 102 and extends over a width of the header. The reel 164 is coupled to header 102 and rotatably supported by arms 145, each arm (only one shown in FIG. 1) is coupled to an end of reel 164. A respective reel height actuator 147 is pivotally coupled to each arm 145 and frame 172. The reel height actuators 147 can be a variety of different types of actuators, such a hydraulic cylinder, a pneumatic actuator, an electric actuator, as well as various other actuators. The reel height actuators 147 can be controllably actuated (e.g., extended and retracted), to raise and lower reel 164 (e.g., raise and lower the height of reel 164, such as the height of reel relative to cutter 104), as generally indicated by arrow 197. The reel 164 includes a center frame member 177 which can be rotated (e.g., counterclockwise in FIG. 1) around a rotational axis 175 by a controllable reel speed actuator 176, which may be in the form of various drives, such as a hydraulic motor, a pneumatic motor, an electric motor, as well as various other drives. Header 102 also includes reel fore-to-aft actuator(s) 183 which can be controllably actuated (e.g., extended and retracted) to control the fore-to-aft position of reel 164 by moving a support bearing of the center frame member 175 along each of the arms 145. Thus, fore-to-aft position actuators 183 can be controllably actuated to drive movement fore or aft, as indicated generally by arrow 199. The reel fore-to-aft actuator(s) 183 can be a variety of different types of actuators, such as a hydraulic cylinder, a pneumatic actuator, an electric actuator, as well as various other actuators.

Reel 164 includes a number of reel finger carriers 119 which extend radially relative to center frame member 177 and are supported by reel arms 123. The reel finger carriers 119 extend over a width of the header 102. A plurality of reel fingers 117 are coupled to and spaced apart along each reel carrier 119. The reel finger carriers 119 and thus the reel fingers 117 are rotatably mounted relative to the reel arms 123. Thus, the reel fingers 117 can be kept in a desired orientation as they rotate around center frame member 175 with rotation of reel 164. The orientation of the reel finger carriers 119, and thus the orientation of the reel fingers 117, can be controlled via a reel finger orientation member 179 (e.g., a lever), which, in one example, sets the position of a cam track about the central axis 175 of center frame member 177. A reel finger position actuator 181 can be controllably actuated (e.g., extended and retracted), to adjust the reel finger orientation member 179. Thus, the reel finger position actuator 181 can be actuated to control the orientation of reel finger carriers 119, and thus the orientation of reel fingers 117.

Thresher 110 illustratively includes a threshing rotor 112 and a set of concaves 114. Further, agricultural harvester 100 also includes a separator 116. Agricultural harvester 100 also includes a cleaning subsystem or cleaning shoe that includes a cleaning fan 120, chaffer 122, and sieve 124. Agricultural harvester 100 also includes discharge beater 126, a tailing elevator, clean grain elevator 130, a clean grain auger 127, as well as unloading auger 134 and chute 136. The clean grain elevator moves clean grain into clean grain tank 132. Agricultural harvester 100 also includes a residue subsystem that can include chopper 140 and a spreader. Agricultural harvester 100 also includes a propulsion subsystem that includes an engine that drives ground engaging components 144, such as wheels or tracks. In some examples, a combine harvester within the scope of the present disclosure may have more than one of any of the subsystems mentioned above. In some examples, agricultural harvester 100 may have left and right cleaning subsystems, separators, etc., which are not shown in FIG. 1.

In operation, and by way of overview, agricultural harvester 100 illustratively moves through a field in the direction indicated by arrow 147. As agricultural harvester 100 moves, header 102 (and the associated reel 164) engages the crop 206 (e.g., grain or other threshable crop) to be harvested and gathers the crop toward cutter 113.

An operator of agricultural harvester 100 can be a local human operator, a remote human operator, or an automated system. An operator command is a command by an operator. The operator may determine a cutting table or a cutter position setting. The operator of agricultural harvester 100 may determine one or more of a cut height setting, a header height setting, a header tilt angle setting, or a header roll angle setting for header 102. Additionally, the operator of agricultural harvester may determine one or more of a reel height setting, a reel fore-to-aft position setting, a reel speed setting, and a reel fingers position setting. For example, the operator inputs (e.g., into operator interface mechanisms 218) a setting or settings to a control system 314, described in more detail below, that controls, among other things, the various actuators. The actuators maintain the various items at their settings based on the settings input by the operator and control by the control system 314. Each of the settings may be implemented independently of the others. The control system 314 may respond to error (e.g., the difference between the setting and a measured parameter of the items being controlled) with a responsiveness that is determined based on a selected sensitivity level. If the sensitivity level is set at a greater level of sensitivity, the control system responds to smaller errors, and attempts to reduce the detected errors more quickly than when the sensitivity is at a lower level of sensitivity. In other examples, the control system 314 may control the various settings automatically, such as based on various inputs as will be described in greater detail below. Thus, in some examples, no operator input is needed other than to perhaps merely activate the automatic control of the control system 314.

Returning to the description of the operation of agricultural harvester 100, after crops are cut by cutter 104, the severed crop material is carried towards conveyer 112. Conveyer 112 moves the severed crop to a conveyer in feeder house 106 which conveys the crop material through feeder house 106 toward feed accelerator 108, which accelerates the crop material into thresher 110. The crop material is threshed by rotor 112 rotating the crop against concaves 114. The threshed crop material is moved by a separator rotor in separator 116 where a portion of the residue is moved by discharge beater 126 toward the residue subsystem. The portion of residue transferred to the residue subsystem is chopped by residue chopper 140 and may be spread on the field by a spreader. In other configurations, the residue is released from the agricultural harvester 100 in a windrow. In other examples, the residue subsystem can include weed seed eliminators (not shown) such as seed baggers or other seed collectors, or seed crushers or other seed destroyers.

Grain falls to a cleaning subsystem. Chaffer 122 separates some larger pieces of material from the grain, and sieve 124 separates some of finer pieces of material from the clean grain. Clean grain falls to an auger 127 that moves the grain to an inlet end of clean grain elevator 130, and the clean grain elevator 130 moves the clean grain upwards, depositing the clean grain in clean grain tank 132. Residue is removed from the cleaning subsystem by airflow generated by cleaning fan 120. Cleaning fan 120 directs air along an airflow path upwardly through the sieves and chaffers. The airflow carries residue rearwardly in agricultural harvester 100 toward the residue handling subsystem.

In some examples, a tailings elevator (not shown) returns tailings to thresher 110 where the tailings are re-threshed. Alternatively, the tailings also may be passed to a separate re-threshing mechanism by a tailings elevator or another transport device where the tailings are re-threshed as well.

FIG. 1 also shows that, in one example, agricultural harvester 100 includes one or more geographic position sensors 304, one or more machine speed sensors 146, one or more separator loss sensors 148, a clean grain camera 150, one or more observation sensor systems 151, one or more header/cut heigh sensors 197, and one or more loss sensors 152 provided in the cleaning subsystem.

Geographic position sensors 304 illustratively sense or detect the geographic position or location of agricultural harvester 100. Geographic position sensors 304 can include, but are not limited to, a global navigation satellite system (GNSS) receiver that receives signals from a GNSS satellite transmitter. Geographic position sensors 304 can also include a real-time kinematic (RTK) component that is configured to enhance the precision of position data derived from the GNSS signal. Geographic position sensors 304 can include a dead reckoning system, a cellular triangulation system, or any of a variety of other geographic position sensors.

Machine speed sensor 146 senses the travel speed of agricultural harvester 100 over the ground. Machine speed sensor 146 may sense the travel speed of the agricultural harvester 100 by sensing the speed of rotation of the ground engaging components (such as wheels or tracks), a drive shaft, an axel, or other components. In some instances, the travel speed may be sensed using a positioning system, such as geographic position sensors 304, a global positioning system (GPS), a dead reckoning system, a long range navigation (LORAN) system, or a wide variety of other systems or sensors that provide an indication of travel speed.

Loss sensors 152 illustratively provide an output signal indicative of the quantity of grain loss occurring in both the right and left sides of the cleaning subsystem. In some examples, sensors 152 are strike sensors which count grain strikes per unit of time or per unit of distance traveled to provide an indication of the grain loss occurring at the cleaning subsystem. The strike sensors for the right and left sides of the cleaning subsystem 118 may provide individual signals or a combined or aggregated signal. In some examples, sensors 152 may include a single sensor as opposed to separate sensors provided for each cleaning subsystem.

Separator loss sensor 148 provides a signal indicative of grain loss in the left and right separators, not separately shown in FIG. 1. The separator loss sensors 148 may be associated with the left and right separators and may provide separate grain loss signals or a combined or aggregate signal. In some instances, sensing grain loss in the separators may also be performed using a wide variety of different types of sensors as well.

Observation sensor systems 151 are configured to sense various characteristics, including, but not limited to, crop height. Observation sensor systems 151 may be in the form of or include one or more of an imaging system, such as a mono or stereo camera, optical sensors, lidar, radar, an ultrasonic sensor, as well as various other sensors, such as sensors that detect one or more bands of electromagnetic radiation reflected by the crop or crop material. In some examples, more than one characteristic can be detected by observation sensor systems 151. An observation sensor system 151, for instance a first observation sensor system, may observe (or have a field of view that includes) one or more of header 102, an area ahead of header 102, an area around header 102, and an area behind header 102. In one example, observation sensor systems 151 illustratively detect a height of crop across an area of interest in front of header 102, the area of interest may be of a given width (e.g., consistent with the width of header 102) a given length (e.g., a length suitable for forward adjustment), as well as be disposed at a given distance ahead of header 102 (e.g., at a suitable distance for forward adjustment). Additionally, while a certain number of observation sensor systems 151 are shown, in other examples, agricultural harvester 100 may include a different number of observation sensor systems. Additionally, while the observation sensor systems 151 are shown being disposed at certain locations, it will be understood that in other examples observation sensor systems 151 may be disposed at various locations on agricultural harvester 100.

Header/cut height sensors 197 illustratively detect a height of header 102 or a portion of header 102, such as cutter 113, above the surface of the field 111. In the illustrated example, header/cut height sensors 197 comprise contact sensors which contact the surface of the field and vary in displacement depending on the height of the header 102. This displacement can be detected to derive header and/or cut height. In other examples, the header/cut height sensors 197 may be non-contact sensors, such as imaging systems (e.g., mono or stereo cameras), optical sensors, lidar, radar, ultrasonic sensors, as well as various other sensors suitable for detecting a height of header 102 or a component of header 102 above the surface of the field 111. The header/cut height sensors 197 can be disposed along the width of header 102 such that the height of the header 102 or the component of the header 102 can be detected along the width of header 102.

Agricultural harvester 100 may also include other sensors and measurement mechanisms. For instance, agricultural harvester 100 may include one or more of the following sensors:; a reel height sensor that senses the height of reel 164; a reel speed sensor that senses the rotational speed of reel 164, a reel fore-to-aft sensor that sense the fore-to-aft position of reel 164; a reel finger position sensor that senses the position (e.g., angular position or orientation) of reel fingers 117 or reel finger carriers 119, or both; stability sensors that sense oscillation or bouncing motion (and amplitude) of agricultural harvester 100; a residue setting sensor that is configured to sense whether agricultural harvester 100 is configured to chop the residue, produce a windrow, etc.; a cleaning shoe fan speed sensor to sense the speed of fan 120; a concave clearance sensor that senses clearance between the rotor 112 and concaves 114; a threshing rotor speed sensor that senses a rotor speed of rotor 112; a chaffer clearance sensor that senses the size of openings in chaffer 122; a sieve clearance sensor that senses the size of openings in sieve 124; a material other than grain (MOG) moisture sensor that senses a moisture level of the MOG passing through agricultural harvester 100; one or more machine setting sensors configured to sense various configurable settings of agricultural harvester 100; a machine orientation sensor that senses the orientation of agricultural harvester 100; and crop property sensors that sense a variety of different types of crop properties, such as crop type, crop moisture, and other crop properties. Crop property sensors may also be configured to sense characteristics of the severed crop material as the crop material is being processed by agricultural harvester 100. For example, in some instances, the crop property sensors may sense grain quality such as broken grain, MOG levels; grain constituents such as starches and protein; and grain feed rate as the grain travels through the feeder house 106, clean grain elevator 130, or elsewhere in the agricultural harvester 100. The crop property sensors may also sense the feed rate of biomass through feeder house 106, through the separator 116 or elsewhere in agricultural harvester 100. The crop property sensors may also sense the feed rate as a mass flow rate of grain through elevator 130 or through other portions of the agricultural harvester 100 or provide other output signals indicative of other sensed variables. These are merely examples.

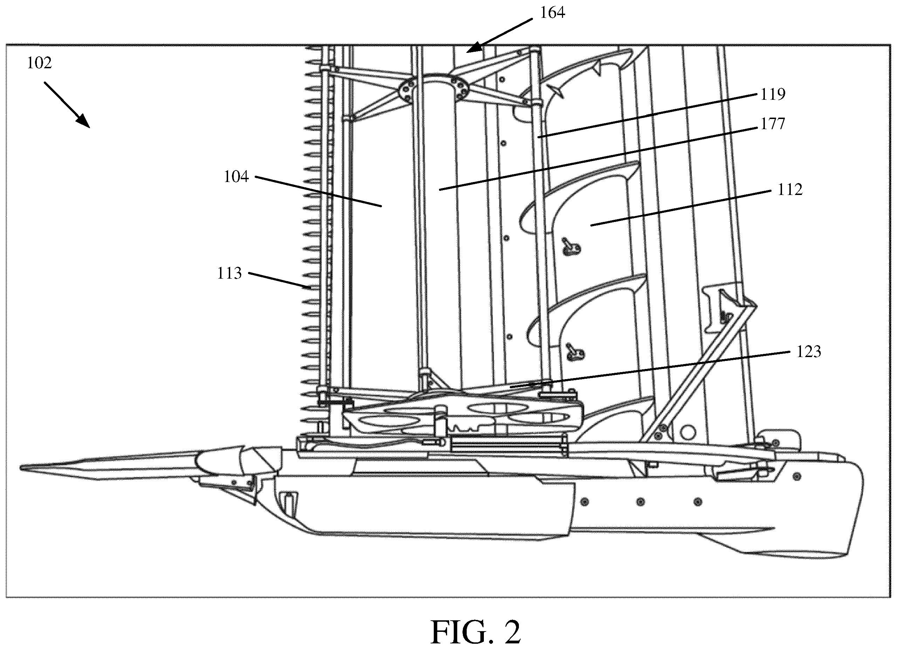

FIG. 2 is a perspective view of header 102. Some portions of header 102 have been removed for the sake of illustration, such as reel tines 117. FIG. 2 shows cutting table 104 and cutter 113 in a relatively extended position, such that cutter 113 is extended in the fore-to-aft position relative to reel 164, such that cutter 113 is ahead of reel 164.

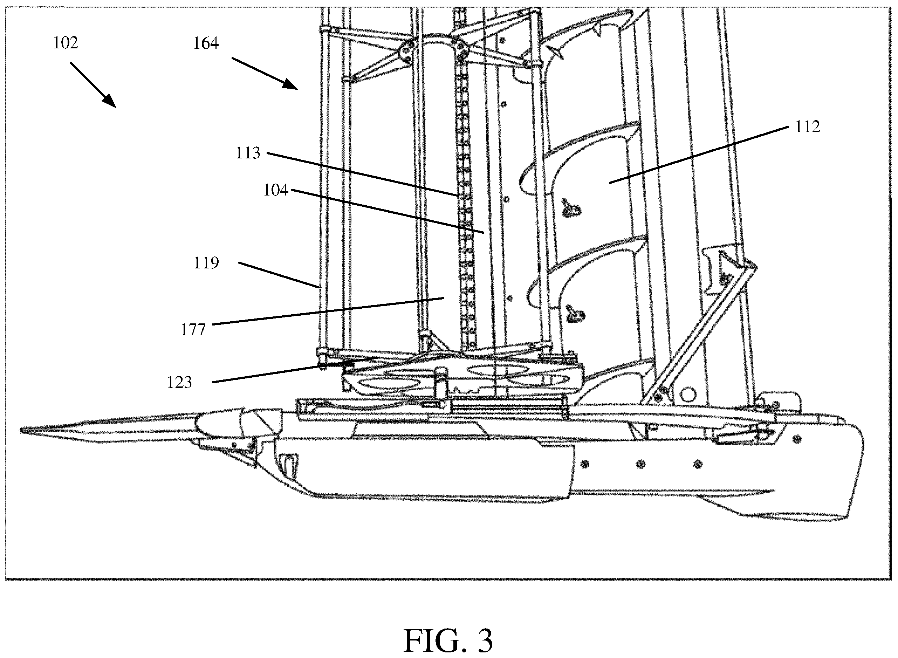

FIG. 3 is a perspective view of header 102. FIG. 3 is similar to FIG. 2 except that FIG. 3 shows cutting table 104 and cutter 113 in a relatively retracted position, such that cutter 113 is retracted in the fore-to-aft position relative to reel 164, such that cutter 113 is behind, at least a portion of reel 164 (e.g., center frame member 177).

It will be understood that the position of the cutting table 104 and the cutter 113 is variable to any number of different position in a range of positions between a fully extended and fully retracted position. The positions shown in FIGS. 1-3 are not limiting, and are shown for example only.

Assuming a similar header/cut height, the taller the plant the deeper or more extended the cutting table should be, such that the crops are cut earlier. Thus, generally, for a fixed header/cut height, as the crop height increases, the extension of the cutting table 104 and thus the cutter 113 should also increase. As the crop height decreases, the cutting table 104 and thus the cutter 113 should be retracted. The precise positioning will also depend on the height at which the crop is cut. The crop height, along with the cut height, gives an approximation of the length of the severed crop and thus an indication of where the top of the crop will land on the cutting platform.

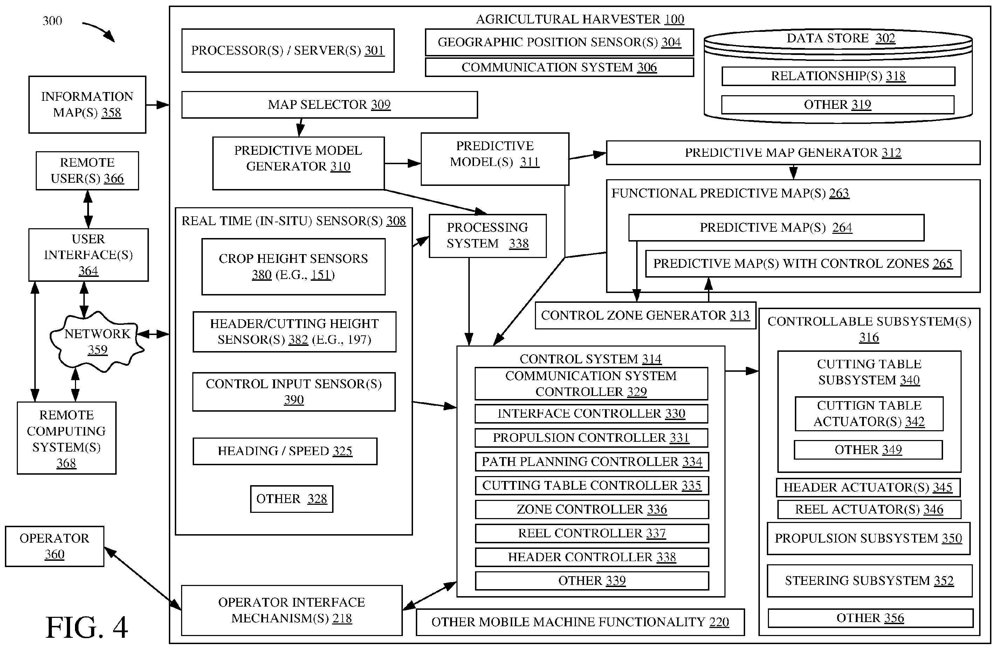

FIG. 4 is a block diagram showing some portions of an agricultural harvesting system architecture 300. FIG. 4 shows that agricultural harvesting system architecture 300 includes agricultural harvester 100, one or more remote computing systems 368, an operator 360, one or more remote users 366, one or more remote user interfaces 364, network 359, and one or more information maps 358. Agricultural harvester 100, itself, illustratively includes one or more processors or servers 301, data store 302, one or more geographic position sensors 304, communication system 306, one or more in-situ sensors 308 that sense one or more characteristics at a worksite concurrent with an operation, and a processing system 338 that processes the sensor data (e.g., sensor signals, images, etc.) generated by in-situ sensors 308 to generate processed sensor data. The in-situ sensors 308 generate values corresponding to the sensed characteristics. Mobile machine 100 also includes a predictive model or relationship generator (collectively referred to hereinafter as "predictive model generator 310"), predictive model or relationship (collectively referred to hereinafter as "predictive model 311"), predictive map generator 312, control zone generator 313, control system 314, one or more controllable subsystems 316, and operator interface mechanisms 218. The mobile machine can also include a wide variety of other machine functionality 320.

The in-situ sensors 308 can be on-board mobile machine 100, remote from mobile machine, such as deployed at fixed locations on the worksite or on another machine operating in concert with mobile machine 100, such as an aerial vehicle, and other types of sensors, or a combination thereof. In-situ sensors 308 sense characteristics at a worksite during the course of an operation. In-situ sensors 308 illustratively include crop height sensors 380, header/cut height sensors 382, control input sensors 390, heading/speed sensors 325, and can include various other sensors 328.

Crop height sensors 380 illustratively detect the height of crop at the field at which agricultural harvester 100 is operating. Crop height sensors 380 can include imaging systems, such as cameras (e.g., stereo camera, mono camera, etc.), optical sensors, radar, lidar, ultrasonic sensors, as well as various other sensors, including but not limited to, sensors that detect one or more wavelengths of electromagnetic radiation emitted (or reflected) from the crops. In some examples, observation sensor systems 151 are or include crop height sensors 380. In some examples, crop height sensors observe (or have a field of view that includes) one or more of area(s) around the header 102 (e.g., one or more of area(s) in front of header 102, adjacent to the header 102, such as behind header 102, to the side of header 102) and the header 102.

Header/cut height sensors 382 a height of header 102 or a component of header (e.g., cutter 113 or cutting table 104) above a surface of the field at which agricultural harvester 100 is operating. Header/cut height sensors 382 can include contact sensors, such as sensors 197 shown in FIG. 1. In other examples, header/cut height sensors 382 can include non-contact sensors such as imaging systems, such as cameras (e.g., stereo camera, mono camera, etc.), optical sensors, radar, lidar, ultrasonic sensors, as well as various other sensors.

Control input sensors 390 illustratively detect control inputs that are used to control one or more items of agricultural harvester 100, such as one or more controllable subsystems 316. Control input sensors 390 may detect, as a control input, an operator input into an operator input mechanism 218. For example, agricultural harvester 100 may include one or more input mechanisms, actuatable/interactable by the operator 360, to control operation of a controllable subsystem. Control input sensors 390 may detect, as a control input, a user input into a user interface mechanism 364. For example, user interface mechanisms 364 may include one or more input mechanisms, actuatable/interactable by a user 366, to control operation of a controllable subsystem. Control input sensors 390 may detect, as a control input, a control signal generated by control system 314. For example, control system 314 may generate control signals to control one or more controllable subsystems. The control inputs may command an operation setting of a controllable subsystem, such as positions (e.g., fore-to-aft positions) of cutting table 104 and cutter 113, positions (e.g., height, fore-to-aft, etc.) of reel 164, positions (e.g., height, pitch, roll, yaw, etc.) of header 102, speed of reel 164, positions (e.g., angular position or orientation) of reel fingers 117, as well as various other operation settings. Control input sensors 390 thus generate control input values indicative of the operation settings commanded by the control inputs.

Heading/speed sensors 325 detect a heading and speed at which agricultural harvester 100 is traversing the worksite during the operation. This can include sensors that sense the movement of ground-engaging elements (e.g., wheels or tracks of agricultural harvester 100), such as sensors 146, or can utilize signals received from other sources, such as geographic position sensors 304. Thus, while heading/speed sensors 325 as described herein are shown as separate from geographic position sensors 304, in some examples, machine heading/speed is derived from signals received from geographic positions sensors 304 and subsequent processing. In other examples, heading/speed sensors 325 are separate sensors, such as sensors 146, and do not utilize signals received from other sources.

Other in-situ sensors 328 may be any of a wide variety of other sensors, including, but not limited, sensors that detect various other characteristics at the field, such as characteristics of the field, characteristics of the plants at the field, and characteristics of the agricultural harvester 100, such as operating parameters. Other in-situ sensors 328 can include, but are not limited to, the sensors described above with regard to FIG. 1. Other in-situ sensors 328 can be on-board agricultural harvester 100 or can be remote from agricultural harvester 100, such as other in-situ sensors 328 on-board another mobile machine that capture in-situ data of the worksite or sensors at fixed locations throughout the worksite. The remote data from remote sensors can be obtained by agricultural harvester 100 via communication system 306 over network 359.

In-situ data includes data taken from a sensor on-board the agricultural harvester 100 or taken by any sensor where the data are detected during the operation of agricultural harvester 100 at a worksite.

Processing system 338 processes the sensor data (e.g., sensor signals, images, etc.) generated by in-situ sensors 308 to generate processed sensor data indicative of one or more characteristics. For example, processing system generates processed sensor data indicative of characteristic values based on the sensor data generated by in-situ sensors 308, such as one or more of crop height values based on sensor data generated by crop height sensors 380, header or cut height values based on sensor data generated by header/cut height sensors, and control input values (e.g., cutting table 104 and cutter 113 position control input values) based on sensor data generated by control input sensors 390. Processing system 338 also processes sensor data generated by other in-situ sensors 308 to generate processed sensor data indicative of other characteristic values, for instance one or more of machine speed (travel speed, acceleration, deceleration, etc.) values based on sensor data generated by heading/speed sensors 325, machine heading values based on sensor data generated by heading/speed sensors 325, as well as various other values based on sensor data generated by various other in-situ sensors 328.

It will be understood that processing system 338 can be implemented by one or more processers or servers, such as processors or servers 301. Additionally, processing system 338 can utilize various filtering techniques, noise filtering techniques, sensor signal categorization, aggregation, normalization, as well as various other processing functionality. Similarly, processing system 338 can utilize various image processing techniques such as, sequential image comparison, RGB, edge detection, black/white analysis, machine learning, neural networks, pixel testing, pixel clustering, shape detection, as well any number of other suitable image processing and data extraction functionality.

FIG. 4 also shows remote users 366 interacting with agricultural harvester 100 or remote computing systems 368, or both, through user interfaces mechanisms 364 over network 359. In some examples, user interface mechanisms 364 may include joysticks, levers, a steering wheel, linkages, pedals, buttons, dials, keypads, user actuatable elements (such as icons, buttons, etc.) on a user interface display device, a microphone and speaker (where speech recognition and speech synthesis are provided), among a wide variety of other types of control devices. Where a touch sensitive display system is provided, a user 366 may interact with user interface mechanisms 364 using touch gestures. These examples described above are provided as illustrative examples and are not intended to limit the scope of the present disclosure. Consequently, other types of user interface mechanisms 364 may be used and are within the scope of the present disclosure.

Remote computing systems 368 can be a wide variety of different types of systems, or combinations thereof. For example, remote computing systems 368 can be in a remote server environment. Further, remote computing systems 368 can be remote computing systems, such as mobile devices, a remote network, a farm manager system, a vendor system, or a wide variety of other remote systems. In one example, agricultural harvester 100 can be controlled remotely by remote computing systems 368 or by remote users 366, or both. As will be described below, in some examples, one or more of the components shown being disposed on agricultural harvester 100 can be located elsewhere, such as at remote computing systems 368.

FIG. 4 also shows that an operator 360 may operate agricultural harvester 100. The operator 360 interacts with operator interface mechanisms 218. In some examples, operator interface mechanisms 218 may include joysticks, levers, a steering wheel, linkages, pedals, buttons, dials, keypads, user actuatable elements (such as icons, buttons, etc.) on a user interface display device, a microphone and speaker (where speech recognition and speech synthesis are provided), among a wide variety of other types of control devices. Where a touch sensitive display system is provided, operator 360 may interact with operator interface mechanisms 218 using touch gestures. In some examples, the operator interface mechanisms 218 may be fixed in the operator compartment 101 or removable from the operator compartment 101 but operationally coupleable to (e.g., in communication with) the agricultural harvester 100, or both. For instance, where the operator is a remote operator, one or more of the operator interface mechanism 218 may be remote or removeable from agricultural harvester 100. These examples described above are provided as illustrative examples and are not intended to limit the scope of the present disclosure. Consequently, other types of operator interface mechanisms 218 may be used and are within the scope of the present disclosure. Operator 360 may be local to agricultural harvester 100, such as in an operator compartment 101 or may be remote from agricultural harvester 100.

FIG. 4 also shows that agricultural harvester 100 can obtain one or more information maps 358. As described herein, the information maps 358 include, for example, an vegetative index map, a crop height map, a genotype map, a seeding map, as well as various other maps. However, information maps 358 may also encompass other types of data, such as other types of data that were obtained prior to a harvesting operation or a map from a prior operation. In other examples, information maps 358 can be generated during a current operation, such a map generated by predictive map generator 312 based on a predictive model 311 generated by predictive model generator 310 or a map generated based on sensor data generated during the current operation.

Information maps 358 may be downloaded onto mobile machine 100 over network 359 and stored in data store 302, using communication system 306 or in other ways. In some examples, communication system 306 may be a cellular communication system, a system for communicating over a wide area network or a local area network, a system for communicating over a near field communication network, or a communication system configured to communicate over any of a variety of other networks or combinations of networks. Network 359 illustratively represents any or a combination of any of the variety of networks. Communication system 306 may also include a system that facilitates downloads or transfers of information to and from a secure digital (SD) card or a universal serial bus (USB) card or both.

In one example, predictive model generator 310 generator generates a model that is indicative of a relationship between the values sensed by the in-situ sensors 308. For example, predictive model generator 310 may generate a predictive cutting table control input model that models a relationship between detected crop height, detected cut height, and detected cutting table control inputs. This is merely one example.

In another example, predictive model generator 310 generates a model that is indicative of a relationship between the values sensed by the in-situ sensors 308 and values mapped to the field by the information maps 358. For example, if the information map 358 maps vegetative index values to different locations in the worksite, and the in-situ sensors 308 are sensing values indicative of crop height, then model generator 310 generates a predictive crop height model that models the relationship between the vegetative index values and the crop height values. This is merely one example.

In another example, predictive model generator 310 generates a model that is indicative of a relationship between values sensed by the in-situ sensors 308, values mapped to the field by the information maps 358, and other values sensed by the in-sit sensors 308. For example, if the information map 358 maps crop height values to different locations in the worksite, and the in-situ sensors 308 are sensing values indicative of cut height and values indicative of cutting table control input, then model generator 310 generates a predictive cutting table control input model that models the relationship between crop height values, cut height values, and cutting table control input values. This is merely one example.

In some examples, the predictive map generator 312 uses the predictive models generated by predictive model generator 310 to generate functional predictive maps 263 that predict the value of a characteristic, sensed by the in-situ sensors 308, such as crop height or control input, at different locations in the field based upon one or more of the information maps 358. For example, where the predictive model is a predictive crop height model that models a relationship between crop height values and one or more of vegetative index values from a vegetative index map, crop height values from a crop height map, genotype values from a genotype map, seeding characteristic values from a seeding map, and other characteristic values from another type of map, then predictive map generator 312 generates a functional predictive crop height map that predicts crop height values at different locations at the field based on one or more of the mapped values at those locations and the predictive crop height model. This is merely an example.

In some examples, the type of values in the functional predictive map 263 may be the same as the in-situ data type sensed by the in-situ sensors 308. In some instances, the type of values in the functional predictive map 263 may have different units from the data sensed by the in-situ sensors 308. In some examples, the type of values in the functional predictive map 263 may be different from the data type sensed by the in-situ sensors 308 but have a relationship to the type of data type sensed by the in-situ sensors 308. For example, in some examples, the data type sensed by the in-situ sensors 308 may be indicative of the type of values in the functional predictive map 263. In some examples, the type of data in the functional predictive map 263 may be different than the data type in the information maps 358. In some instances, the type of data in the functional predictive map 263 may have different units from the data in the information maps 358. In some examples, the type of data in the functional predictive map 263 may be different from the data type in the information maps 358 but has a relationship to the data type in the information maps 358. For example, in some examples, the data type in the information maps 358 may be indicative of the type of data in the functional predictive map 263. In some examples, the type of data in the functional predictive map 263 is different than one of, or both of, the in-situ data type sensed by the in-situ sensors 308 and the data type in the information maps 358. In some examples, the type of data in the functional predictive map 263 is the same as one of, or both of, of the in-situ data type sensed by the in-situ sensors 308 and the data type in information maps 358. In some examples, the type of data in the functional predictive map 263 is the same as one of the in-situ data type sensed by the in-situ sensors 308 or the data type in the information maps 358, and different than the other.

As shown in FIG. 4, predictive map 264 predicts the value of a sensed characteristic (sensed by in-situ sensors 308), or a characteristic related to the sensed characteristic, at various locations across the worksite based upon one or more information values in one or more information maps 358 at those locations and using the predictive model 311. For example, if predictive model generator 310 has generated a predictive model indicative of a relationship between genotype values and crop height values, then, given the genotype value at different locations across the field, predictive map generator 312 generates a predictive map 264 that predicts crop height values at different locations across the worksite. The genotype value, obtained from the genotype map, at those locations and the relationship between genotype values and the crop height values, obtained from the predictive model 311, are used to generate the predictive map 264. In another example, if predictive model generator 310 has generated a predictive model indicative of a relationship between crop height values and cutting table control input values, then, given the crop height value at different locations across the field, predictive map generator 312 generates a predictive map 264 that predicts cutting table control input values at different locations across the worksite. The crop height value, obtained from the crop height map, at those locations and the relationship between crop height values and the cutting table control input values, obtained from the predictive model 311, are used to generate the predictive map 264. These are merely some examples.

Some variations in the data types that are mapped in the information maps 358, the data types sensed by in-situ sensors 308, and the data types predicted on the predictive map 264 will now be described.

In some examples, the data type in one or more information maps 358 is different from the data type sensed by in-situ sensors 308, yet the data type in the predictive map 264 is the same as the data type sensed by the in-situ sensors 308. For instance, the information map 358 may be vegetative index map, and the variable sensed by the in-situ sensors 308 may be crop height. The predictive map 264 may then be a predictive crop height map that maps predictive crop height values to different geographic locations in the in the worksite. This is merely an example.

Also, in some examples, the data type in the information map 358 is different from the data type sensed by in-situ sensors 308, and the data type in the predictive map 264 is different from both the data type in the information map 358 and the data type sensed by the in-situ sensors 308.

In some examples, the information map 358 is from a prior pass through the field during a prior operation and the data type is different from the data type sensed by in-situ sensors 308, yet the data type in the predictive map 264 is the same as the data type sensed by the in-situ sensors 308. For instance, the information map 358 may be a seeding map generated during a previous planting operation on the field, and the variable sensed by the in-situ sensors 308 may be crop height. The predictive map 264 may then be a predictive crop height that maps predictive crop height values to different geographic locations in the worksite. This is merely an example.

In some examples, the information map 358 is from a prior pass through the field during a prior operation and the data type is the same as the data type sensed by in-situ sensors 308, and the data type in the predictive map 264 is also the same as the data type sensed by the in-situ sensors 308. For instance, the information map 358 may be a crop height map generated during a previous year, and the variable sensed by the in-situ sensors 308 may be crop height. The predictive map 264 may then be a predictive crop height map that maps predictive values of crop height to different geographic locations in the field. In such an example, the relative crop height differences in the georeferenced information map 358 from the prior year can be used by predictive model generator 310 to generate a predictive model that models a relationship between the relative crop height differences on the information map 358 and the crop height values sensed by in-situ sensors 308 during the current operation. The predictive model is then used by predictive map generator 310 to generate a predictive crop height map. This is merely an example.

In another example, the information map 358 may be a crop height map generated during a prior operation in the same year, such as a spraying operation performed by a spraying machine, and the variable sensed by the in-situ sensors 308 during the current harvesting operation may be crop height. The predictive map 264 may then be a predictive crop height map that maps predictive crop height values to different geographic locations in the worksite. In such an example, a map of the crop height values at time of the spraying operation is geo-referenced, recorded, and provided to agricultural harvester 100 as an information map 358 of crop height values. In-situ sensors 308 during a current operation can detect crop height at geographic locations in the field and predictive model generator 310 may then build a predictive model that models a relationship between the crop height at time of the current operation and crop height values at the time of the spraying operation. This crop height obtained at the time of the spraying may be more accurate or more reliable than the crop height detected in other ways, such as crop height detected earlier in the season. Additionally, it may be that the relative differences in height (e.g., between detected and mapped crop height) at one or more locations in the field may be applicable to other areas of the field. This is merely an example.

In some examples, predictive map 264 can be provided to the control zone generator 313. Control zone generator 313 groups adjacent portions of an area into one or more control zones based on data values of predictive map 264 that are associated with those adjacent portions. A control zone may include two or more contiguous portions of a worksite, such as a field, for which a control parameter corresponding to the control zone for controlling a controllable subsystem is constant. For example, a response time to alter a setting of controllable subsystems 316 may be inadequate to satisfactorily respond to changes in values contained in a map, such as predictive map 264. In that case, control zone generator 313 parses the map and identifies control zones that are of a defined size to accommodate the response time of the controllable subsystems 316. In another example, control zones may be sized to reduce wear from excessive actuator movement resulting from continuous adjustment. In some examples, there may be a different set of control zones for each controllable subsystem 316 or for groups of controllable subsystems 316. The control zones may be added to the predictive map 264 to obtain predictive control zone map 265. Predictive control zone map 265 can thus be similar to predictive map 264 except that predictive control zone map 265 includes control zone information defining the control zones. Thus, a functional predictive map 263, as described herein, may or may not include control zones. Both predictive map 264 and predictive control zone map 265 are functional predictive maps 263. In one example, a functional predictive map 263 does not include control zones, such as predictive map 264. In another example, a functional predictive map 263 does include control zones, such as predictive control zone map 265.

It will also be appreciated that control zone generator 313 can cluster values to generate control zones and the control zones can be added to predictive control zone map 265, or a separate map, showing only the control zones that are generated. In some examples, the control zones may be used for controlling or calibrating agricultural harvester 100 or both. In other examples, the control zones may be presented to the operator 360 and used to control or calibrate agricultural harvester 100, and, in other examples, the control zones may be presented to the operator 360 or another user, such as a remote user 366, or stored for later use.

Predictive map 264 or predictive control zone map 265, or both, are provided to control system 314, which generates control signals based upon the predictive map 264 or predictive control zone map 265 or both. In some examples, communication system controller 329 controls communication system 306 to communicate the predictive map 264 or predictive control zone map 265 or control signals based on the predictive map 264 or predictive control zone map 265 to other mobile machines that are operating at the same field or in the same operation. In some examples, communication system controller 329 controls the communication system 306 to send the predictive map 264, predictive control zone map 265, or both to other remote systems, such as remote computing systems 368.

Control system 314 includes communication system controller 329, interface controller 330, propulsion controller 331, path planning controller 334, cutting table controller 335, zone controller 336, reel controller 337, header controller 338, and control system 314 can include other items 339. Controllable subsystems 316 include cutting table subsystem 340, header actuators 345, reel actuators 346, propulsion subsystem 350, steering subsystem 352, and subsystems 316 can include a wide variety of other controllable subsystems 356. Cutting table subsystem 340, itself, includes one or more cutting table actuators 342, such as cutting table actuators 161, and can include various other items 344 as well, such as, but not limited to associated delivery systems, such as pumps and/or valves, motors, energy sources (e.g., battery, internal combustion engine, etc.).

Interface controller 330 is operable to generate control signals to control interface mechanisms, such as operator interface mechanisms 218 or user interfaces 364, or both. The interface controller 330 is also operable to present the predictive map 264 or predictive control zone map 265 or other information derived from or based on the predictive map 264, predictive control zone map 265, or both to operator 360 or a remote user 366, or both. As an example, interface controller 330 generates control signals to control a display mechanism to display one or both of predictive map 264 and predictive control zone map 265 for the operator 360 or a remote user 366, or both. Interface controller 330 may generate operator or user actuatable mechanisms that are displayed and can be actuated by the operator or user to interact with the displayed map. The operator or user can edit the map by, for example, correcting a value displayed on the map, based on the operator's or the user's observation.

Path planning controller 334 illustratively generates control signals to control steering subsystem 352 to steer agricultural harvester 100 according to a desired path or according to desired parameters, such as desired steering angles. Path planning controller 334 can control a path planning system to generate a route for mobile machine 100 and can control propulsion subsystem 350 and steering subsystem 352 to steer mobile machine 100 along that route. Path planning controller 334 can generate control signals based on one or more of predictive map 264, predictive map with control zones 265, information maps 358, or control inputs, such as by an operator or user.

Propulsion controller 331 illustratively generates control signals to control propulsion subsystem 350 to control a speed characteristic of mobile machine 100, such as one or more of travel speed, acceleration, and deceleration. Propulsion subsystem 350 may include various power train components of mobile machine 100, such as, but not limited to, an engine or motor, and a transmission (or gear box). Propulsion controller 331 can generate control signals based on one or more of predictive map 264, predictive map with control zones 265, information maps 358, or control inputs, such as by an operator or user.

Cutting table controller 335 illustratively generates control signals to control the position (e.g., fore-to-aft position) of cutting table 104 and thus the position of cutter 113. For example, cutting table controller 335 can generate control signals to control the one or more cutting table actuators 342 to control a position of cutting table 104 and thus cutter 113. Cutting table actuators 342 can be similar to cutting table actuators 161 or can be another type of cutting table actuator. Cutting table controller 335 can generate control signals based on one or more of predictive map 264, predictive map with control zones 265, information maps 358, or control inputs, such as by an operator or user.

Reel controller 337 illustratively generates control signals to control the parameters of reel 164, such as the height of reel 164, the fore-to-aft position of reel 164, the speed of reel 164, and the position of reel fingers 117 of reel 164. For example, reel controller 337 can generate control signals to control reel actuators 346 (e.g., 147) to control the height of reel 164, to control reel actuators 346 (e.g., 183) to control the fore-to-aft position of reel 164, to control reel actuators 346 (e.g., 176) to control the speed of reel 164, and to control reel actuators 346 (e.g., 181) to control a position of reel fingers 117. Reel controller 337 can generate control signals based on one or more of predictive map 264, predictive map with control zones 265, information maps 358, or control inputs, such as by an operator or user.

Header controller 338 illustratively generates control signals to control the parameters of header 102, such as the height of header 102, the roll of header 102, and the tilt of header 102. For example, header controller 338 can generate control signals to control header actuators 345 (e.g., 107) to control a height of header 102, to control header actuators 345 (e.g., 187) to control a roll of header 102, and to control header actuators 345 (e.g., 187) to control a tilt of header 102. Header controller 338 can generate control signals based on one or more of predictive maps 264, predictive map with control zones 265, information maps 358, or control inputs, such as by an operator or user.

Zone controller 336 illustratively generates control signals to control one or more controllable subsystems 316 to control operation of the one or more controllable subsystems 316 based on the predictive control zone map 265.

Other controllers 339 included on the mobile machine 100, or at other locations in agricultural system 300, can control other subsystems 316 based on one or more of predictive map 264, predictive map with control zones 265, information maps 358, or control inputs, such as by an operator or user.

FIG. 4 also shows that data store 302 can include relationships 318 as well as various other data 319. Relationships 318 are predefined relationships that describe cutting table position (e.g., ideal cutting table position, such as ideal cutting table fore-to-aft position) given a cut height and a crop height. Relationships 318 can be provided by an operator or user, provided to the control system 314, provided by a manufacturer, a third-party, expert knowledge, as well as various other sources. Some examples of predefined relationships 318 are lookup tables, functions, models, as well as various other types of relationships. Predefined relationships 318 identify a cutting table position (e.g., as an output) based on a given cut height or a given crop height, or both, (e.g., as inputs). It will be noted that data store 302 can store various other data 319, which includes, but is not limited to the various other data described herein.

While the illustrated example of FIG. 4 shows that various components of agricultural harvesting system architecture 300 are located on agricultural harvester 100, it will be understood that in other examples one or more of the components illustrated on agricultural harvester 100 in FIG. 4 can be located at other locations, such as one or more remote computing systems 368. For instance, one or more of data stores 302, map selector 309, predictive model generator 310, predictive model 311, predictive map generator 312, functional predictive maps 263 (e.g., 264 and 265), control zone generator 313, and control system 314 can be located remotely from mobile machine 100 but can communicate with (or be communicated to) agricultural harvester 100 via communication system 306 and network 359. Thus, the predictive models 311 and functional predictive maps 263 may be generated at remote locations away from agricultural harvester 100 and communicated to mobile machine 100 over network 302, for instance, communication system 306 can download the predictive models 311 and functional predictive maps 263 from the remote locations and store them in data store 302. In other examples, agricultural harvester 100 may access the predictive models 311 and functional predictive maps 263 at the remote locations without downloading the predictive models 311 and functional predictive maps 263. The information used in the generation of the predictive models 311 and functional predictive maps 263 may be provided to the predictive model generator 310 and the predictive map generator 312 at those remote locations over network 359, for example in-situ sensor data generator by in-situ sensors 308 can be provided over network 359 to the remote locations. Similarly, information maps 358 can be provided to the remote locations.

Similarly, where various components are located remotely from agricultural harvester 100, those components can receive data from components of agricultural harvester 100 over network 359. For example, where predictive model generator 310 and predictive map generator 312 are located remotely from agricultural harvester 100, such as at remote computing systems 368, data generated by in-situ sensors 308 and geographic position sensors 304, for instance, can be communicated to the remote computing systems 368 over network 359. Additionally, information maps 358 can be obtained by remote computing systems 368 over network 359 or over another network.

Similarly, the remote systems may include a respective control system or control signal generator that generates control output (e.g., control signals) that are communicated to agricultural harvester 100 and used by the local control system 314 for the control of agricultural harvester 100.

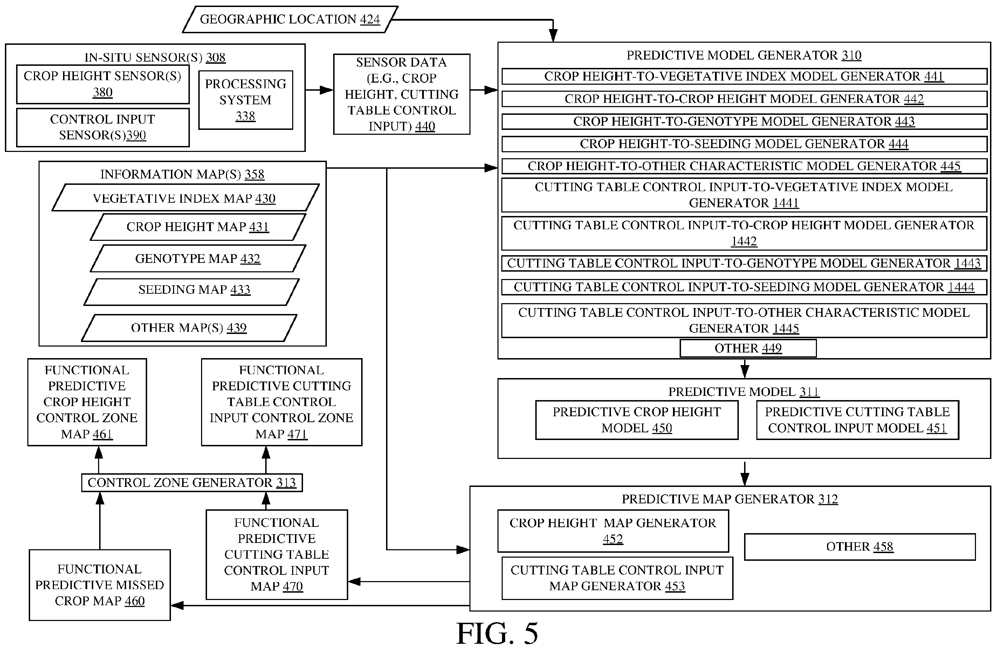

FIG. 5 is a block diagram of a portion of the agricultural system architecture 300 shown in FIG. 4. Particularly, FIG. 5 shows, among other things, examples of the predictive model generator 310 and the predictive map generator 312 in more detail. FIG. 5 also illustrates information flow among the various components shown. The predictive model generator 310 receives one or more of a vegetative index map 430, a crop height map, a genotype map 432, a seeding map 433, and other map(s) 439. Predictive model generator 310 also receives a geographic location 424, or an indication of a geographic location, such as from geographic position sensors 304. Geographic location 424 illustratively represents the geographic location of a value detected by in-situ sensors 308. In some examples, the geographic position of the agricultural harvester 100, as detected by geographic position sensors 304, will not be the same as the geographic position on the field to which a value detected by in-situ sensors 308 corresponds. For example, crop height sensors 380 may detect crop height ahead of agricultural harvester 100. Thus, the geographic position of agricultural harvester 100 at the time the height of the crop is detected may not be the geographic location of the crop that is detected to which the height corresponds. It will be appreciated that the geographic position indicated by geographic position sensor 304, along with timing circuitry, machine speed and heading, machine dimensions, sensor position (e.g., relative to geographic position sensor), sensor parameters (e.g., field of view), can be used to derive a geographic location at the field to which a value a detected by an in-situ sensor 308 corresponds.

In-situ sensors 308 illustratively include crop height sensors 380, control input sensors 390, as well as processing system 338. In some examples, processing system 338 is separate from in-situ sensors 308 (such as the example shown in FIG. 4). In some instances, crop height sensors 380 or control input sensors 390, or both, may be located on-board agricultural harvester 100. The processing system 338 processes sensor data generated from crop height sensors 380 to generate processed sensor data 440 indicative of crop height values. The processing system 338 processes sensor data generated from control input sensors 390 to generate processed sensor data 440 indicative of cutting table control input values.

As shown in FIG. 5, the example predictive model generator 310 includes a crop height-to-vegetative index model generator 441, a crop height-to-crop height model generator 442, a crop height-to-genotype model generator 443, a crop height-to-seeding characteristic model generator 444, a crop height-to-other characteristic model generator 445, a cutting table control input-to-vegetative index model generator 1441, a cutting table control input-to-crop height model generator 1442, a cutting table control input-to-genotype model generator 1443, a cutting table control input-to-seeding characteristic model generator 1444, and a cutting table control input-to-other characteristic model generator 1445. In other examples, the predictive model generator 310 may include additional, fewer, or different components than those shown in the example of FIG. 5. Consequently, in some examples, the predictive model generator 310 may include other items 449 as well, which may include other types of predictive model generators to generate other types of models.

Crop height-to-vegetative index model generator 441 identifies a relationship between crop height value(s) detected in in-situ sensor data 440, at geographic location(s) to which the crop height value(s), detected in the in-situ sensor data 440, correspond, and vegetative index value(s) from the vegetative index map 430 corresponding to the same geographic location(s) to which the detected crop height value(s) correspond. Based on this relationship established by crop height-to-vegetative index model generator 441, crop height-to-vegetative index model generator 441 generates a predictive crop height model. The predictive crop height model is used by crop height map generator 452 to predict crop height at different locations in the field based upon the georeferenced vegetative index values contained in the vegetative index map 430 at the same locations in the field. Thus, for a given location in the field, a crop height value can be predicted at the given location based on the predictive crop height model and the vegetative index value, from the vegetative index map 430, at that given location.

Crop height-to-crop height model generator 442 identifies a relationship between crop height value(s) detected in in-situ sensor data 440, at geographic location(s) to which the crop height value(s), detected in the in-situ sensor data 440, correspond, and crop height value(s) from the crop height map 430 corresponding to the same geographic location(s) to which the detected crop height value(s) correspond. Based on this relationship established by crop height-to-crop height model generator 442, crop height-to-crop height model generator 442 generates a predictive crop height model. The predictive crop height model is used by crop height map generator 452 to predict crop height at different locations in the field based upon the georeferenced crop height values contained in the crop height map 431 at the same locations in the field. Thus, for a given location in the field, a crop height value can be predicted at the given location based on the predictive crop height model and the crop height value, from the crop height map 431, at that given location.

Crop height-to-genotype model generator 443 identifies a relationship between crop height value(s) detected in in-situ sensor data 440, at geographic location(s) to which the crop height value(s), detected in the in-situ sensor data 440, correspond, and genotype value(s) from the genotype map 432 corresponding to the same geographic location(s) to which the detected crop height value(s) correspond. Based on this relationship established by crop height-to-genotype model generator 443, crop height-to-genotype model generator 443 generates a predictive crop height model. The predictive crop height model is used by crop height map generator 452 to predict crop height at different locations in the field based upon the georeferenced genotype values contained in the genotype map 432 at the same locations in the field. Thus, for a given location in the field, a crop height value can be predicted at the given location based on the predictive crop height model and the genotype value, from the genotype map 432, at that given location.

Crop height-to-seeding characteristic model generator 444 identifies a relationship between crop height value(s) detected in in-situ sensor data 440, at geographic location(s) to which the crop height value(s), detected in the in-situ sensor data 440, correspond, and seeding characteristic value(s) from the seeding map 433 corresponding to the same geographic location(s) to which the detected crop height value(s) correspond. Based on this relationship established by crop height-to-seeding characteristic model generator 444, crop height-to-seeding characteristic model generator 444 generates a predictive crop height model. The predictive crop height model is used by crop height map generator 452 to predict crop height at different locations in the field based upon the georeferenced seeding characteristic values contained in the seeding map 433 at the same locations in the field. Thus, for a given location in the field, a crop height value can be predicted at the given location based on the predictive crop height model and the seeding characteristic value, from the seeding map 433, at that given location.

Crop height-to-other characteristic model generator 445 identifies a relationship between crop height value(s) detected in in-situ sensor data 440, at geographic location(s) to which the crop height value(s), detected in the in-situ sensor data 440, correspond, and other characteristic value(s) from an other map 439 corresponding to the same geographic location(s) to which the detected crop height value(s) correspond. Based on this relationship established by crop height-to-other characteristic model generator 445, crop height-to-other characteristic model generator 445 generates a predictive crop height model. The predictive crop height model is used by crop height map generator 452 to predict crop height at different locations in the field based upon the georeferenced other characteristic values contained in an other map 439 at the same locations in the field. Thus, for a given location in the field, a crop height value can be predicted at the given location based on the predictive crop height model and the other characteristic value, from the other map 439, at that given location.

In light of the above, the predictive model generator 310 is operable to produce a plurality of predictive crop height models, such as one or more of the predictive crop height models generated by model generators 441, 442, 443, 444, 445, and 449. In another example, two or more of the predictive models described above may be combined into a single predictive crop height model, such as a predictive crop height model that predicts crop height based upon two or more of the vegetative index value, the crop height value, the genotype value, the seeding characteristic value, and the other characteristic value at different locations in the field. Any of these crop height models, or combinations thereof, are represented collectively by predictive crop height model 450 in FIG. 5.

The predictive crop height model 450 is provided to predictive map generator 312. In the example of FIG. 5, predictive map generator 312 includes crop height map generator 452. In other examples, predictive map generator 312 may include additional or different map generators. Thus, in some examples, predictive map generator 312 may include other items 458 which may include other types of map generators to generate other types of maps.

Crop height map generator 452 receives one or more of the vegetative index map 430, the crop height map 431, the genotype map 432, the seeding map 433, and an other map 439, along with the predictive crop height model 450 which predicts crop height based upon one or more of a vegetative index value, a crop height value, a genotype value, a seeding characteristic value, and an other characteristic value, and generates a predictive map that predicts crop height at different locations in the field, such as functional predictive crop height map 460.

Map generator 312 thus outputs a functional predictive crop height map 460 that is predictive of crop height. Functional predictive crop height map 460 is a predictive map 264. The functional predictive crop height map 460, in one example, predicts crop height at different locations in a field. The functional predictive crop height map 460 may be provided to control zone generator 313, control system 314, or both. Control zone generator 313 generates control zones and incorporates those control zones into the functional predictive crop height map 460 to produce a predictive control zone map 265, that is a functional predictive crop height control zone map 461.

One or both of functional predictive crop height map 460 and functional predictive crop height control zone map 461 may be provided to control system 314, which generates control signals to control one or more of the controllable subsystems 316 based upon the functional predictive crop height map 460, the functional predictive crop height control zone map 461, or both.

Cutting table control input-to-vegetative index model generator 1441 identifies a relationship between cutting table control input value(s) detected in in-situ sensor data 440, at geographic location(s) to which the cutting table control input value(s), detected in the in-situ sensor data 440, correspond, and vegetative index value(s) from the vegetative index map 430 corresponding to the same geographic location(s) to which the detected cutting table control input value(s) correspond. Based on this relationship established by cutting table control input-to-vegetative index model generator 1441, cutting table control input-to-vegetative index model generator 1441 generates a predictive cutting table control input model. The predictive cutting table control input model is used by cutting table control input map generator 453 to predict cutting table control input at different locations in the field based upon the georeferenced vegetative index values contained in the vegetative index map 430 at the same locations in the field. Thus, for a given location in the field, a cutting table control input value can be predicted at the given location based on the predictive cutting table control input model and the vegetative index value, from the vegetative index map 430, at that given location.

Cutting table control input-to-crop height model generator 1442 identifies a relationship between cutting table control input value(s) detected in in-situ sensor data 440, at geographic location(s) to which the cutting table control input value(s), detected in the in-situ sensor data 440, correspond, and crop height value(s) from the crop height map 431 corresponding to the same geographic location(s) to which the detected cutting table control input value(s) correspond. Based on this relationship established by cutting table control input-to-crop height model generator 1442, cutting table control input-to-crop height model generator 1442 generates a predictive cutting table control input model. The predictive cutting table control input model is used by cutting table control input map generator 453 to predict cutting table control input at different locations in the field based upon the georeferenced crop height values contained in the crop height map 431 at the same locations in the field. Thus, for a given location in the field, a cutting table control input value can be predicted at the given location based on the predictive cutting table control input model and the crop height value, from the crop height map 431, at that given location.

Cutting table control input-to-genotype model generator 1443 identifies a relationship between cutting table control input value(s) detected in in-situ sensor data 440, at geographic location(s) to which the cutting table control input value(s), detected in the in-situ sensor data 440, correspond, and genotype value(s) from the genotype map 432 corresponding to the same geographic location(s) to which the detected cutting table control input value(s) correspond. Based on this relationship established by cutting table control input-to-genotype model generator 1443, cutting table control input-to-genotype model generator 1443 generates a predictive cutting table control input model. The predictive cutting table control input model is used by cutting table control input map generator 453 to predict cutting table control input at different locations in the field based upon the georeferenced genotype values contained in the genotype map 432 at the same locations in the field. Thus, for a given location in the field, a cutting table control input value can be predicted at the given location based on the predictive cutting table control input model and the genotype value, from the genotype map 432, at that given location.

Cutting table control input-to-seeding characteristic model generator 1444 identifies a relationship between cutting table control input value(s) detected in in-situ sensor data 440, at geographic location(s) to which the cutting table control input value(s), detected in the in-situ sensor data 440, correspond, and seeding characteristic value(s) from the seeding map 433 corresponding to the same geographic location(s) to which the detected cutting table control input value(s) correspond. Based on this relationship established by cutting table control input-to-seeding characteristic model generator 1444, cutting table control input-to-seeding characteristic model generator 1444 generates a predictive cutting table control input model. The predictive cutting table control input model is used by cutting table control input map generator 453 to predict cutting table control input at different locations in the field based upon the georeferenced seeding characteristic values contained in the seeding map 433 at the same locations in the field. Thus, for a given location in the field, a cutting table control input value can be predicted at the given location based on the predictive cutting table control input model and the seeding characteristic value, from the seeding map 433, at that given location.

Cutting table control input-to-other characteristic model generator 1445 identifies a relationship between cutting table control input value(s) detected in in-situ sensor data 440, at geographic location(s) to which the cutting table control input value(s), detected in the in-situ sensor data 440, correspond, and other characteristic value(s) from an other map 439 corresponding to the same geographic location(s) to which the detected cutting table control input value(s) correspond. Based on this relationship established by cutting table control input-to-other characteristic model generator 1445, cutting table control input-to-other characteristic model generator 1445 generates a predictive cutting table control input model. The predictive cutting table control input model is used by cutting table control input map generator 453 to predict cutting table control input at different locations in the field based upon the georeferenced other characteristic values contained in an other map 439 at the same locations in the field. Thus, for a given location in the field, a cutting table control input value can be predicted at the given location based on the predictive cutting table control input model and the other characteristic value, from the other map 439, at that given location.

In light of the above, the predictive model generator 310 is operable to produce a plurality of predictive cutting table control input models, such as one or more of the predictive cutting table control input models generated by model generators 1441, 1442, 1443, 1444, 1445, and 449. In another example, two or more of the predictive models described above may be combined into a single predictive cutting table control input model, such as a predictive cutting table control input model that predicts cutting table control input based upon two or more of the vegetative index value, the crop height value, the genotype value, the seeding characteristic value, and the other characteristic value at different locations in the field. Any of these cutting table control input models, or combinations thereof, are represented collectively by predictive cutting table control input model 451 in FIG. 5.

The predictive cutting table control input model 451 is provided to predictive map generator 312. In the example of FIG. 5, predictive map generator 312 includes cutting table control input map generator 453. In other examples, predictive map generator 312 may include additional or different map generators. Thus, in some examples, predictive map generator 312 may include other items 458 which may include other types of map generators to generate other types of maps.

Cutting table control input map generator 453 receives one or more of the vegetative index map 430, the crop height map 431, the genotype map 432, the seeding map 433, and an other map 439, along with the predictive cutting table control input model 451 which predicts cutting table control input based upon one or more of a vegetative index value, a crop height value, a genotype value, a seeding characteristic value, and an other characteristic value, and generates a predictive map that predicts cutting table control input at different locations in the field, such as functional predictive cutting table control input map 470.

Map generator 312 thus outputs a functional predictive cutting table control input map 470 that is predictive of cutting table control input. Functional predictive cutting table control input map 470 is a predictive map 264. The functional predictive cutting table control input map 470, in one example, predicts cutting table control input at different locations in a field. The functional predictive cutting table control input map 470 may be provided to control zone generator 313, control system 314, or both. Control zone generator 313 generates control zones and incorporates those control zones into the functional predictive cutting table control input map 470 to produce a predictive control zone map 265, that is a functional predictive cutting table control input control zone map 471.

One or both of functional predictive cutting table control input map 470 and functional predictive cutting table control input control zone map 471 may be provided to control system 314, which generates control signals to control one or more of the controllable subsystems 316 based upon the functional predictive cutting table control input map 470, the functional predictive cutting table control input control zone map 471, or both.

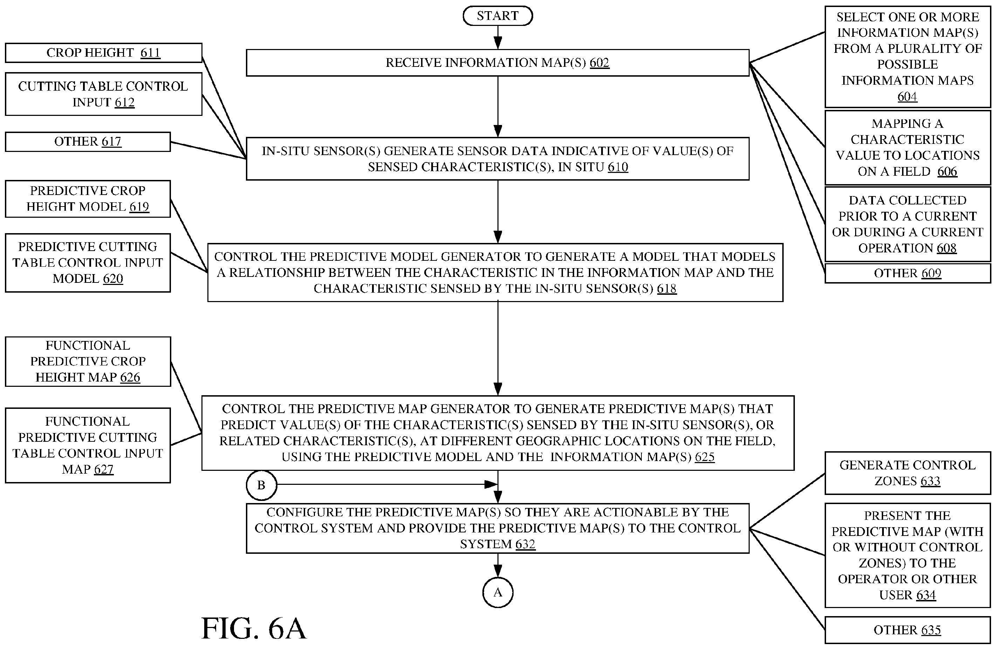

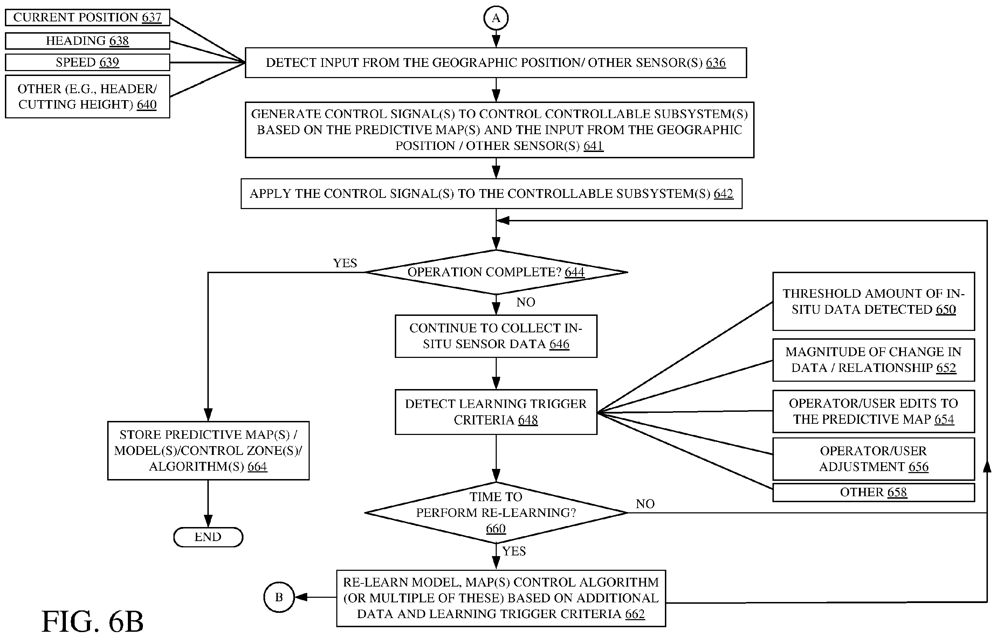

FIGS. 6A-6B (collectively referred to herein as FIG. 6) show a flow diagram illustrating one example of the operation of agricultural harvesting system architecture 300 in generating a predictive model and a predictive map

At block 602, agricultural system 300 receives one or more information maps 358. Examples of information maps 358 or receiving information maps 358 are discussed with respect to blocks 604, 606, 608, and 609. As discussed above, information maps 358 map values of a variable, corresponding to a characteristic, to different locations in the field, as indicated at block 606. As indicated at block 604, receiving the information maps 358 may involve selecting one or more of a plurality of possible information maps 358 that are available. For instance, one information map 358 may be a vegetative index map, such as vegetative index map 430. Another information map 358 may be a crop height map, such as crop height map 431. Another information map 358 may be a genotype map, such as genotype map 432. Another information map 358 may be a seeding map, such as seeding map 433. Information maps 358 may include various other types of maps that map various other characteristics, such as other maps 439.

The process by which one or more information maps 358 are selected can be manual, semi-automated, or automated. The information maps 358 can be based on data collected prior to a current operation. For instance, the data may be collected based on aerial images taken during a previous year, or earlier in the current season, or at other times. The data may be based on data detected in ways other than using aerial images. For instance, the data may be collected during a previous operation on the worksite, such an operation during a previous year, or a previous operation earlier in the current season, or at other times. The machines performing those previous operations may be outfitted with one or more sensors that generate sensor data indicative of one or more characteristics. For example, the sensed operating parameters during a previous seeding operation or sensed characteristics during a spraying operation earlier in the year may be used as data to generate the information maps 358. In other examples, and as described above, the information maps 358 may be predictive maps having predictive values. The predictive information map 358 can be generated by predictive map generator 312 based on a model generated by predictive model generator 310. The data for the information maps 358 can be obtained by agricultural system 300 using communication system 306 and stored in data store 302. The data for the information maps 358 can be obtained by agricultural system 300 using communication system 306 in other ways as well, and this is indicated by block 609 in the flow diagram of FIG. 6.

At block 610, as agricultural harvester 100 is operating, in-situ sensors 308 generate sensor data indicative of one or more in-situ data values indicative of a characteristic. For example, crop height sensors 380 generate sensor data indicative of one or more in-situ data values indicative of one or more crop height values, as indicated by block 611. Control input sensors 390 generate sensor data indicative of one or more in-situ data values indicative of one or more cutting table control inputs, as indicated by block 612. Various other in-situ sensors 308 or geographic position sensors 304, or both, generate sensor data indicative of one or more in-situ data values indicative of one or more other characteristic values, as indicated by block 617. For example, header/cutting height sensors 382 may generate sensor data indicative of a header or cutting height.

In some examples, data from in-situ sensors 308 is georeferenced using position, heading, or speed data, as well as machine dimension information, sensor parameter information (e.g., field of view), sensor position information, etc.

In one example, at block 618, predictive model generator 310 controls one or more of the model generators 441, 442, 443, 444, 445 and 449 to generate a model that models the relationship between the mapped values, such as the vegetative index values, the crop height values, the genotype values, the seeding characteristic value, and the other characteristic values contained in the respective information map and the in-situ values of crop height sensed by the in-situ sensors 308. Predictive model generator 310 generates a predictive crop height model 450 that predicts values of crop height based on one or more of vegetative index values, crop height values, genotype values, seeding characteristic values, and other characteristic values, as indicated by block 619.

In one example, at block 618, predictive model generator 310 controls one or more of the model generators 1441, 1442, 1443, 1444, 1445 and 449 to generate a model that models the relationship between the mapped values, such as the vegetative index values, the crop height values, the genotype values, the seeding characteristic value, and the other characteristic values contained in the respective information map and the in-situ values of cutting table control input sensed by the in-situ sensors 308. Predictive model generator 310 generates a predictive cutting table control input model 451 that predicts values of cutting table control input based on one or more of vegetative index values, crop height values, genotype values, seeding characteristic values, and other characteristic values, as indicated by block 620.

At block 625, the relationship(s) or model(s) generated by predictive model generator 310 are provided to predictive map generator 312. In one example, at block 625, predictive map generator 312 generates a functional predictive crop height map 460 that predicts values of crop height at different geographic locations in a field at which agricultural harvester 100 is operating using the predictive crop height model 450 and one or more of the information maps 358, such as vegetative index map 430, crop height map 431, genotype map 432, seeding map 433, and an other map 439. Generating a predictive crop height map, such as functional predictive crop height map 460, is indicated by block 626.

It should be noted that, in some examples, the functional predictive crop height map 460 may include two or more different map layers. Each map layer may represent a different data type, for instance, a functional predictive crop height map 460 that provides two or more of a map layer that provides predictive crop height based on vegetative index values from vegetative index map 430, a map layer that provides predictive crop height based on crop height values from crop height map 431, a map layer that provides predictive crop height based on genotype values from genotype map 432, a map layer that provides predictive crop height based on seeding characteristic values from seeding map 433, and a map layer that provides predictive crop height based on other characteristic values from an other map 439. Additionally, or alternatively, functional predictive crop height map 460 can include a map layer that provides predictive crop height based on one or more of vegetative index values from vegetative index map 430, crop height values from crop height map 431, genotype values from genotype map 432, seeding characteristic values from seeding map 433, and values of an other characteristic from an other map 439.

In one example, at block 625, predictive map generator 312 generates a functional predictive cutting table control input map 470 that predicts values of cutting table control input at different geographic locations in a field at which agricultural harvester 100 is operating using the predictive cutting table control input model 451 and one or more of the information maps 358, such as vegetative index map 430, crop height map 431, genotype map 432, seeding map 433, and an other map 439. Generating a predictive cutting table control input map, such as functional predictive cutting table control input map 470, is indicated by block 627.

It should be noted that, in some examples, the functional predictive cutting table control input map 470 may include two or more different map layers. Each map layer may represent a different data type, for instance, a functional predictive cutting table control input map 470 that provides two or more of a map layer that provides predictive cutting table control input based on vegetative index values from vegetative index map 430, a map layer that provides predictive cutting table control input based on crop height values from crop height map 431, a map layer that provides predictive cutting table control input based on genotype values from genotype map 432, a map layer that provides predictive cutting table control input based on seeding characteristic values from seeding map 433, and a map layer that provides predictive cutting table control input based on other characteristic values from an other map 439. Additionally, or alternatively, functional predictive cutting table control input map 470 can include a map layer that provides predictive cutting table control input based on one or more of vegetative index values from vegetative index map 430, crop height values from crop height map 431, genotype values from genotype map 432, seeding characteristic values from seeding map 433, and values of an other characteristic from an other map 439.

At block 632, predictive map generator 312 configures one or more of the functional predictive crop height map 460 and the functional predictive cutting table control input map 470, so that one or more of the functional predictive crop height map 460 and the functional predictive cutting table control input map 470 are actionable (or consumable) by control system 314. Predictive map generator 312 can provide one or more of the functional predictive crop height map 460 and the functional predictive cutting table control input map 470, to the control system 314 or to control zone generator 313, or both. Some examples of the different ways in which the one or more maps 460 and 470 can be configured or output are described with respect to blocks 632, 633, 634, and 635. For instance, predictive map generator 312 configures one or more of the functional predictive crop height map 460 and the functional predictive cutting table control input map 470 so that the one or more maps 460 and 470 include values that can be read by control system 314 and used as the basis for generating control signals for one or more of the different controllable subsystems 316 of mobile machine 100, as indicated by block 632.

In one example, at block 633, control zone generator 313 can divide the functional predictive crop height map 460 into control zones based on the values on the functional predictive crop height map 460 to generate functional predictive crop height control zone map 461. In one example, at block 633, control zone generator 313 can divide the functional predictive cutting table control input map 470 into control zones based on the values on the functional predictive cutting table control input map 470 to generate functional predictive cutting table control input control zone map 471.

Contiguously-geolocated values that are within a threshold value of one another can be grouped into a control zone. The threshold value can be a default threshold value, or the threshold value can be set based on an operator input, based on an input from an automated system, or based on other criteria. A size of the zones may be based on a responsiveness of the control system 314, the controllable subsystems 316, based on wear considerations, or on other criteria.

At block 634, predictive map generator 312 configures one or more of the functional predictive crop height map 460 and the functional predictive cutting table control input map 470 for presentation to an operator or other user. At block 634, control zone generator 313 can configure one or more of the functional predictive crop height control zone map 461 and the functional predictive cutting table control input control zone map 471 for presentation to an operator or other user. When presented to an operator or other user, the presentation of the one or more maps 460 and 470 or of the one or more maps 461 and 471, or both, may contain one or more of the predictive values on the one or more functional predictive maps 460 and 470 correlated to geographic location, the control zones of the one or more functional control zone maps 461 and 471 correlated to geographic location, and settings values or control parameters that are used based on the predicted values on the one or more functional predictive maps 460 and 470 or control zones on the one or more functional predictive control zone maps 461 and 471. The presentation can, in another example, include more abstracted information or more detailed information. The presentation can also include a confidence level that indicates an accuracy with which the predictive values on the one or more maps 460 and 470 or the control zones one the one or more maps 461 and 471 conform to measured values that may be measured by sensors on agricultural harvester 100 as agricultural harvester 100 operates at the field. Further where information is presented to more than one location, an authentication and authorization system can be provided to implement authentication and authorization processes. For instance, there may be a hierarchy of individuals that are authorized to view and change maps and other presented information. By way of example, an on-board display device may show the maps in near real time locally on the machine, or the maps may also be generated at one or more remote locations, or both. In some examples, each physical display device at each location may be associated with a person or a user permission level. The user permission level may be used to determine which display elements are visible on the physical display device and which values the corresponding person may change. As an example, a local operator of mobile machine 100 may be unable to see the information corresponding to the one or more functional predictive maps 460 and 470 or make any changes to machine operation. A supervisor, such as a supervisor at a remote location, however, may be able to see the one or more functional predictive maps 460 and 470 on the display but be prevented from making any changes. A manager, who may be at a separate remote location, may be able to see all of the elements on the one or more functional predictive maps 460 and 470 and also be able to change the one or more functional predictive maps 460 and 470. In some instances, the one or more functional predictive maps 460 and 470 accessible and changeable by a manager located remotely may be used in machine control. This is one example of an authorization hierarchy that may be implemented. The one or more functional predictive maps 460 and 470 or the one or more functional predictive control zone maps 461 and 471, or both, can be configured in other ways as well, as indicated by block 635.

At block 636, input from geographic position sensors 304 and other in-situ sensors 308 are received by the control system 314. Particularly, at block 637, control system 314 detects an input from the geographic position sensors 304 identifying a geographic location of agricultural harvester 100. Block 638 represents receipt by the control system 314 of sensor inputs indicative of trajectory or heading of agricultural harvester 100, and block 639 represents receipt by the control system 314 of a speed of agricultural harvester 100. Block 640 represents receipt by the control system 314 of other information from various in-situ sensors 308. In one example, such as when using functional predictive crop height map 460 or functional predictive crop height control zone map 461, or both, for control, block 640 represents receipt by the control system 314 of cut height values from header/cutting height sensors 382.

At block 641, control system 314 generates control signals to control the controllable subsystems 316 based on one or more of the functional predictive maps 460 and 470 or one or more of the functional predictive control zone maps 461 and 471, or both, and the input from the geographic position sensor 304 and any other in-situ sensors 308. In one example, at block 641, control system generates control signals to control the controllable subsystems 316 based on the functional predictive crop height map 460 or the functional predictive crop height control zone map 461, or both, the input from the geographic position sensor 304, the input from the header/cutting height sensors 382, and any other in-situ sensors 308.

At block 642, control system 314 applies the control signals to the controllable subsystems 316. It will be appreciated that the particular control signals that are generated, and the particular controllable subsystems 316 that are controlled, may vary based upon one or more different things. For example, the control signals that are generated and the controllable subsystems 316 that are controlled may be based on the type of the one or more functional predictive maps 460 and 470 or the one or more functional predictive control zone maps 461 and 471, or both, that are being used. Similarly, the control signals that are generated and the controllable subsystems 316 that are controlled and the timing of the control signals can be based on various latencies of agricultural harvester 100 and the responsiveness of the controllable subsystems 316.

By way of example, propulsion controller 331 of control system 314 can generate control signals to control propulsion subsystem 350 to control one or more propulsion parameters of agricultural harvester 100, such as one or more of the speed at which the agricultural harvester 100 travels, the deceleration of agricultural harvester 100, and the acceleration of agricultural harvester 100, based on one or more of the functional predictive maps 460 and 470 or one or more of the functional predictive control zone maps 461 and 471, or both.

In another example, path planning controller 334 of control system 314 can generate control signals to control steering subsystem 352 to control a route parameter of agricultural harvester 100, such as one or more of a commanded path at the field over which agricultural harvester 100 travels, and the steering of agricultural harvester 100, based on one or more of the functional predictive maps 460 and 470 or one or more of the functional predictive control zone maps 461 and 471, or both.

In another example, cutting table controller 335 of control system 314 can generate control signals to control cutting table subsystem 340 to control the position (e.g., fore-to-aft position) of cutting table 104, and thus cutter 113, based on one or more of the functional predictive maps 460 and 470 or one or more of the functional predictive control zone maps 461 and 471, or both.. For example, cutting table controller 335 can generate control signals to control one or more cutting table actuators 342 to control the position (e.g., fore-to-aft position) of cutting table 104, and thus cutter 113, based on one or more of the functional predictive crop height map 460 and functional predictive crop height control zone map 461. For instance, cutting table controller 335 can generate control signals to control one or more cutting table actuators 342 based on one or more of the maps 460 and 461, along with header/cutting height values detected by header/cutting height sensors 382, and various other inputs, such as inputs from geographic position sensors 304 and inputs from heading/speed sensors 325. In another example, cutting table controller 335 can generate control signals to control one or more cutting table actuators 342 to control the position (e.g., fore-to-aft position) of cutting table 104, and thus cutter 113, based on one or more of the functional predictive cutting table control input map 470 and functional predictive cutting table control input control zone map 471. For instance, cutting table controller 335 can generate control signals to control one or more cutting table actuators 342 based on one or more of the maps 470 and 471, along with various other inputs, such as inputs from geographic position sensors 304 and inputs from heading/speed sensors 325.

In another example, reel controller 337 of control system 314 can generate control signals to control reel actuators 346 to control parameters of the reel 164, such as the height of the reel 164, the fore-to-aft position of the reel 164, the speed of the reel 164, as well as the position of the reel fingers 117 of reel 164. Reel controller 337 can generate control signals based on one or more of the functional predictive maps 460 and 470 or one or more of the functional predictive control zone maps 461 and 471, or both.

In another example, header controller 338 of control system 314 can generate control signals to control header actuators 345 to control parameters of the header 102, such as the height of header 102, the tilt of header 102, or the roll of header 102. Header controller 338 can generate control signals based on one or more of the functional predictive maps 460 and 470 or one or more of the functional predictive control zone maps 461 and 471, or both.

In another example, interface controller 330 of control system 314 can generate control signals to control an interface mechanism (e.g., 218 or 364) to generate a display, alert, notification, or other indication based on or indicative of the one or more functional predictive maps 460 and 470 or one or more of the functional predictive control zone maps 461 and 471, or both.

In another example, communication system controller 329 of control system 314 can generate control signals to control communication system 306 to communicate one or more of the functional predictive maps 460 and 470 or one or more of the functional predictive control zone maps 461 and 471, or both, to another item of agricultural system 300 (e.g., remote computing systems 368 or user interfaces 364).

These are merely examples. Control system 314 can generate various other control signals to control various other items of mobile machine 100 (or agricultural system 300) based on one or more of the functional predictive maps 460 and 470 or one or more of the functional predictive control zone maps 461 and 471, or both.

At block 644, a determination is made as to whether the operation has been completed. If the operation is not completed, the processing advances to block 646 where in-situ sensor data from geographic position sensor 304 and in-situ sensors 308 (and perhaps other sensors) continue to be read.

In some examples, at block 648, agricultural system 300 can also detect learning trigger criteria to perform machine learning on one or more of the functional predictive maps 460 and 470, one or more of the functional predictive control zone maps 461 and 471, one or more of the predictive models 450 and 451, the zones generated by control zone generator 313, one or more control algorithms implemented by the controllers in the control system 314, and other triggered learning.

The learning trigger criteria can include any of a wide variety of different criteria. Some examples of detecting trigger criteria are discussed with respect to blocks 650, 652, 654, 656, and 658. For instance, in some examples, triggered learning can involve recreation of a relationship used to generate a predictive model when a threshold amount of in-situ sensor data are obtained from in-situ sensors 308. In such examples, receipt of an amount of in-situ sensor data from the in-situ sensors 308 that exceeds a threshold triggers or causes the predictive model generator 310 to generate a new predictive model that is used by predictive map generator 312. Thus, as agricultural harvester 100 continues an operation, receipt of the threshold amount of in-situ sensor data from the in-situ sensors 308 triggers the creation of a new relationship represented by a new predictive model (e.g., one or more of new model 450 and new model 451) generated by predictive model generator 310. Further, one or more new functional predictive maps 460 and 470 or one or more new functional predictive control zone maps 461 and 471, or both, can be generated using the respective new models 450 and 451. Block 650 represents detecting a threshold amount of in-situ sensor data used to trigger creation of a new predictive model.

In other examples, the learning trigger criteria may be based on how much the in-situ sensor data from the in-situ sensors 308 are changing, such as over time or compared to previous values. For example, if variations within the in-situ sensor data (or the relationship between the in-situ sensor data and the information in the one or more information maps 358) are within a selected range or is less than a defined amount, or below a threshold value, then a new predictive model is not generated by the predictive model generator 310. As a result, the predictive map generator 312 does not generate a new functional predictive map, a new functional predictive control zone map, or both. However, if variations within the in-situ sensor data are outside of the selected range, are greater than the defined amount, or are above the threshold value, for example, then the predictive model generator 310 generates a new model using all or a portion of the newly received in-situ sensor data that the predictive map generator 312 uses to generate a new functional predictive map which can be provided to control zone generator 313 for the creation of a new functional predictive control zone map. At block 652, variations in the in-situ sensor data, such as a magnitude of an amount by which the data exceeds the selected range or a magnitude of the variation of the relationship between the in-situ sensor data and the information in the one or more information maps, can be used as a trigger to cause generation of one or more of a new predictive model, a new functional predictive map, and a new functional predictive control zone map. Keeping with the examples described above, the threshold, the range, and the defined amount can be set to default values; set by an operator or user interaction through a user interface; set by an automated system; or set in other ways.

Other learning trigger criteria can also be used. For instance, if predictive model generator 310 switches to a different information map (different from the originally selected information map), then switching to the different information map may trigger re-learning by predictive model generator 310, predictive map generator 312, control zone generator 313, control system 314, or other items. In another example, transitioning of agricultural harvester 100 to a different topography or to a different control zone may be used as learning trigger criteria as well.

In some instances, operator 360 or user 366 can also edit the one or more functional predictive maps 460 and 470 or the one or more functional predictive control zone maps 461 and 471, or both. The edits can change value(s) on the one or more functional predictive maps 460 and 470, change a size, shape, position, or existence of control zone(s) on the one or more functional predictive control zone maps 461 and 471, or both. Block 654 shows that edited information can be used as learning trigger criteria.

In some instances, it may also be that operator 360 or user 366 observes that automated control of a controllable subsystem 316, is not what the operator or user desires. In such instances, the operator 360 or user 366 may provide a manual adjustment to the controllable subsystem 316 reflecting that the operator 360 or user 366 desires the controllable subsystem 316 to operate in a different way than is being commanded by control system 314. Thus, manual alteration of a setting by the operator 360 or user 366 can cause one or more of predictive model generator 310 to generate a new model, predictive map generator 312 to generate a new functional predictive map, control zone generator 313 to generate one or more new control zones on a functional predictive control zone map, and control system 314 to relearn a control algorithm or to perform machine learning on one or more of the controller components 329 through 339 in control system 314 based upon the adjustment by the operator 360 or user 366, as shown in block 656. Block 658 represents the use of other triggered learning criteria.

In other examples, relearning may be performed periodically or intermittently based, for example, upon a selected time interval such as a discrete time interval or a variable time interval, as indicated by block 660.

If relearning is triggered, whether based upon learning trigger criteria or based upon passage of a time interval, as indicated by block 660, then one or more of the predictive model generator 310, predictive map generator 312, control zone generator 313, and control system 314 performs machine learning to generate one or more new predictive models, one or more new predictive maps, one or more new control zones, and one or more new control algorithms, respectively, based upon the learning trigger criteria. The new predictive model(s), the new predictive map(s), the new control zone(s), and the new control algorithm(s) are generated using any additional data that has been collected since the last learning operation was performed. Performing relearning is indicated by block 662.

If the operation has been completed, operation moves from block 662 to block 664 where one or more of the functional predictive map(s), functional predictive control zone map(s), the predictive model(s), the control zone(s), and the control algorithm(s), are stored. The functional predictive map(s), functional predictive control zone map(s), predictive model(s), control zone(s), and control algorithm(s), may be stored locally on data store 302 or sent to a remote system using communication system 306 for later use.

If the operation has not been completed, operation moves from block 662 to block 632 such that the one or more of the new predictive model(s), the new functional predictive map(s), the new functional predictive control zone map(s), the new control zone(s), and the new control algorithm(s) can be used in the control of agricultural harvester 100.

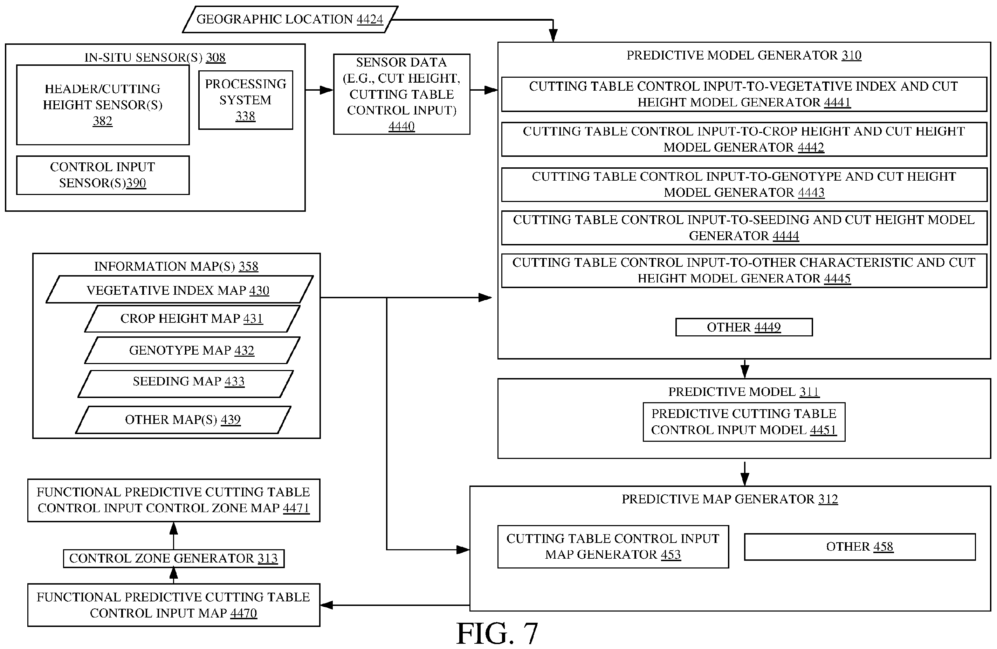

FIG. 7 is a block diagram of a portion of the agricultural system architecture 300 shown in FIG. 4. Particularly, FIG. 7 shows, among other things, examples of the predictive model generator 310 and the predictive map generator 312 in more detail. FIG. 7 also illustrates information flow among the various components shown. The predictive model generator 310 receives one or more of a vegetative index map 430, a crop height map, a genotype map 432, a seeding map 433, and other map(s) 439. Predictive model generator 310 also receives a geographic location 4424, or an indication of a geographic location, such as from geographic position sensors 304. Geographic location 4424 illustratively represents the geographic location of a value detected by in-situ sensors 308. In some examples, the geographic position of the agricultural harvester 100, as detected by geographic position sensors 304, will not be the same as the geographic position on the field to which a value detected by in-situ sensors 308 corresponds. It will be appreciated that the geographic position indicated by geographic position sensor 304, along with timing circuitry, machine speed and heading, machine dimensions, sensor position (e.g., relative to geographic position sensor), sensor parameters (e.g., field of view), can be used to derive a geographic location at the field to which a value a detected by an in-situ sensor 308 corresponds.

In- situ sensors 308 illustratively include header/cutting height sensors 382, control input sensors 390, as well as processing system 338. In some examples, processing system 338 is separate from in-situ sensors 308 (such as the example shown in FIG. 4). In some instances, header/cutting height sensors 382 or control input sensors 390, or both, may be located on-board agricultural harvester 100. The processing system 338 processes sensor data generated from header/cutting sensors 380 to generate processed sensor data 4440 indicative of cut height values. The processing system 338 processes sensor data generated from control input sensors 390 to generate processed sensor data 4440 indicative of cutting table control input values.

As shown in FIG. 7, the example predictive model generator includes a cutting table control input-to-vegetative index and cut height model generator 4441, a cutting table control input-to-crop height and cut height model generator 4442, a cutting table control input-to-genotype and cut height model generator 4443, a cutting table control input-to-seeding characteristic and cut height model generator 4444, and a cutting table control input-to-other characteristic and cut height model generator 4445. In other examples, the predictive model generator 310 may include additional, fewer, or different components than those shown in the example of FIG. 7. Consequently, in some examples, the predictive model generator 310 may include other items 4449 as well, which may include other types of predictive model generators to generate other types of models.

Cutting table control input-to-vegetative index and cut height model generator 4441 identifies a relationship between cutting table control input value(s) detected in in-situ sensor data 4440, at geographic location(s) to which the cutting table control input value(s), detected in the in-situ sensor data 4440, correspond, and vegetative index value(s) from the vegetative index map 430 corresponding to the same geographic location(s) to which the detected cutting table control input value(s) correspond, and cut height value(s) detected in in-situ sensor data 4440 corresponding to the same geographic location(s) to which the detected cutting table control input value(s) correspond.. Based on this relationship established by cutting table control input-to-vegetative index and cut height model generator 4441, cutting table control input-to-vegetative index and cut height model generator 4441 generates a predictive cutting table control input model. The predictive cutting table control input model is used by cutting table control input map generator 453 to predict cutting table control input at different locations in the field based upon the georeferenced vegetative index values contained in the vegetative index map 430 at the same locations in the field and the cut height values corresponding to the same locations in the field. In some examples, the cut height values corresponding to the same locations may be expected cut height values. The expected cut height values may be the current (e.g., at the time the map is generated) cut height values. The current cut height values may be detected by in-situ sensors 308 and provided to map generator 312 as an input (along with the mapped values) to predict cutting table control input values. In some examples, the expected cut height values can be prescribed or predicted cut height values, such as from a prescribed cut height map or a predictive cut height map. In some examples, the expected cut height values may be output by a control system or provided by an operator or user. In some examples, when the expected cut height values are changed (either by an operator or user input, or by a control system, or learning trigger criteria) the map (and perhaps the model) can be made new (or modified or revised.

Thus, for a given location in the field, a cutting table control input value can be predicted at the given location based on the predictive cutting table control input model, the vegetative index value, from the vegetative index map 430, at that given location, and a cut height value (e.g., expected cut height value) corresponding to that given location.

Cutting table control input-to-crop height and cut height model generator 4442 identifies a relationship between cutting table control input value(s) detected in in-situ sensor data 4440, at geographic location(s) to which the cutting table control input value(s), detected in the in-situ sensor data 4440, correspond, and crop height value(s) from the crop height map 431 corresponding to the same geographic location(s) to which the detected cutting table control input value(s) correspond, and cut height value(s) detected in in-situ sensor data 4440 corresponding to the same geographic location(s) to which the detected cutting table control input value(s) correspond.. Based on this relationship established by cutting table control input-to-crop height and cut height model generator 4442, cutting table control input-to-crop height and cut height model generator 4442 generates a predictive cutting table control input model. The predictive cutting table control input model is used by cutting table control input map generator 453 to predict cutting table control input at different locations in the field based upon the georeferenced crop height values contained in the crop height map 431 at the same locations in the field and the cut height values corresponding to the same locations in the field. In some examples, the cut height values corresponding to the same locations may be expected cut height values. The expected cut height values may be the current (e.g., at the time the map is generated) cut height values. The current cut height values may be detected by in-situ sensors 308 and provided to map generator 312 as an input (along with the mapped values) to predict cutting table control input values. In some examples, the expected cut height values can be prescribed or predicted cut height values, such as from a prescribed cut height map or a predictive cut height map. In some examples, the expected cut height values may be output by a control system or provided by an operator or user. In some examples, when the expected cut height values are changed (either by an operator or user input, or by a control system, or learning trigger criteria) the map (and perhaps the model) can be made new (or modified or revised.

Thus, for a given location in the field, a cutting table control input value can be predicted at the given location based on the predictive cutting table control input model, the crop height value, from the crop height map 431, at that given location, and a cut height value (e.g., expected cut height value) corresponding to that given location.

Cutting table control input-to-genotype and cut height model generator 4443 identifies a relationship between cutting table control input value(s) detected in in-situ sensor data 4440, at geographic location(s) to which the cutting table control input value(s), detected in the in-situ sensor data 4440, correspond, and genotype value(s) from the genotype map 432 corresponding to the same geographic location(s) to which the detected cutting table control input value(s) correspond, and cut height value(s) detected in in-situ sensor data 4440 corresponding to the same geographic location(s) to which the detected cutting table control input value(s) correspond.. Based on this relationship established by cutting table control input-to-genotype and cut height model generator 4443, cutting table control input-to-genotype and cut height model generator 4443 generates a predictive cutting table control input model. The predictive cutting table control input model is used by cutting table control input map generator 453 to predict cutting table control input at different locations in the field based upon the georeferenced genotype values contained in the genotype map 432 at the same locations in the field and the cut height values corresponding to the same locations in the field. In some examples, the cut height values corresponding to the same locations may be expected cut height values. The expected cut height values may be the current (e.g., at the time the map is generated) cut height values. The current cut height values may be detected by in-situ sensors 308 and provided to map generator 312 as an input (along with the mapped values) to predict cutting table control input values. In some examples, the expected cut height values can be prescribed or predicted cut height values, such as from a prescribed cut height map or a predictive cut height map. In some examples, the expected cut height values may be output by a control system or provided by an operator or user. In some examples, when the expected cut height values are changed (either by an operator or user input, or by a control system, or learning trigger criteria) the map (and perhaps the model) can be made new (or modified or revised.

Thus, for a given location in the field, a cutting table control input value can be predicted at the given location based on the predictive cutting table control input model, the genotype value, from the genotype map 432, at that given location, and a cut height value (e.g., expected cut height value) corresponding to that given location.

Cutting table control input-to-seeding characteristic and cut height model generator 4444 identifies a relationship between cutting table control input value(s) detected in in-situ sensor data 4440, at geographic location(s) to which the cutting table control input value(s), detected in the in-situ sensor data 4440, correspond, and seeding characteristic value(s) from the seeding map 433 corresponding to the same geographic location(s) to which the detected cutting table control input value(s) correspond, and cut height value(s) detected in in-situ sensor data 4440 corresponding to the same geographic location(s) to which the detected cutting table control input value(s) correspond.. Based on this relationship established by cutting table control input-to-seeding characteristic and cut height model generator 4444, cutting table control input-to-seeding characteristic and cut height model generator 4444 generates a predictive cutting table control input model. The predictive cutting table control input model is used by cutting table control input map generator 453 to predict cutting table control input at different locations in the field based upon the georeferenced seeding characteristic values contained in the seeding map 433 at the same locations in the field and the cut height values corresponding to the same locations in the field. In some examples, the cut height values corresponding to the same locations may be expected cut height values. The expected cut height values may be the current (e.g., at the time the map is generated) cut height values. The current cut height values may be detected by in-situ sensors 308 and provided to map generator 312 as an input (along with the mapped values) to predict cutting table control input values. In some examples, the expected cut height values can be prescribed or predicted cut height values, such as from a prescribed cut height map or a predictive cut height map. In some examples, the expected cut height values may be output by a control system or provided by an operator or user. In some examples, when the expected cut height values are changed (either by an operator or user input, or by a control system, or learning trigger criteria) the map (and perhaps the model) can be made new (or modified or revised.

Thus, for a given location in the field, a cutting table control input value can be predicted at the given location based on the predictive cutting table control input model, the seeding characteristic value, from the seeding map 433, at that given location, and a cut height value (e.g., expected cut height value) corresponding to that given location.

Cutting table control input-to-other characteristic and cut height model generator 4445 identifies a relationship between cutting table control input value(s) detected in in-situ sensor data 4440, at geographic location(s) to which the cutting table control input value(s), detected in the in-situ sensor data 4440, correspond, and other characteristic value(s) from an other map 439 corresponding to the same geographic location(s) to which the detected cutting table control input value(s) correspond, and cut height value(s) detected in in-situ sensor data 4440 corresponding to the same geographic location(s) to which the detected cutting table control input value(s) correspond.. Based on this relationship established by cutting table control input-to-other characteristic and cut height model generator 4445, cutting table control input-to-other characteristic and cut height model generator 4444 generates a predictive cutting table control input model. The predictive cutting table control input model is used by cutting table control input map generator 453 to predict cutting table control input at different locations in the field based upon the georeferenced other characteristic values contained in the other map 439 at the same locations in the field and the cut height values corresponding to the same locations in the field. In some examples, the cut height values corresponding to the same locations may be expected cut height values. The expected cut height values may be the current (e.g., at the time the map is generated) cut height values. The current cut height values may be detected by in-situ sensors 308 and provided to map generator 312 as an input (along with the mapped values) to predict cutting table control input values. In some examples, the expected cut height values can be prescribed or predicted cut height values, such as from a prescribed cut height map or a predictive cut height map. In some examples, the expected cut height values may be output by a control system or provided by an operator or user. In some examples, when the expected cut height values are changed (either by an operator or user input, or by a control system, or learning trigger criteria) the map (and perhaps the model) can be made new (or modified or revised.

Thus, for a given location in the field, a cutting table control input value can be predicted at the given location based on the predictive cutting table control input model, the other characteristic value, from the other map 439, at that given location, and a cut height value (e.g., expected cut height value) corresponding to that given location.

In light of the above, the predictive model generator 310 is operable to produce a plurality of predictive cutting table control input models, such as one or more of the predictive cutting table control input models generated by model generators 4441, 4442, 4443, 4444, 4445, and 4449. In another example, two or more of the predictive models described above may be combined into a single predictive cutting table control input model, such as a predictive cutting table control input model that predicts cutting table control input based upon two or more of the vegetative index value and the expected cut height value, the crop height value and the expected cut height value, the genotype value and the expected cut height value, the seeding characteristic value and the expected cut height value, and the other characteristic value and the expected cut height value at different locations in the field. Any of these cutting table control input models, or combinations thereof, are represented collectively by predictive cutting table control input model 4451 in FIG. 7.

The predictive cutting table control input model 4451 is provided to predictive map generator 312. In the example of FIG. 7, predictive map generator 312 includes cutting table control input map generator 453. In other examples, predictive map generator 312 may include additional or different map generators. Thus, in some examples, predictive map generator 312 may include other items 458 which may include other types of map generators to generate other types of maps.

Cutting table control input map generator 453 receives one or more of the vegetative index map 430, the crop height map 431, the genotype map 432, the seeding map 433, and an other map 439, expected cut height values, along with the predictive cutting table control input model 451 which predicts cutting table control input based upon one or more of a vegetative index value and an expected cut height value, a crop height value and an expected cut height value, a genotype value and an expected cut height value, a seeding characteristic value and an expected cut height value, and an other characteristic value and an expected cut height value, and generates a predictive map that predicts cutting table control input at different locations in the field, such as functional predictive cutting table control input map 4470.

Map generator 312 thus outputs a functional predictive cutting table control input map 4470 that is predictive of cutting table control input. Functional predictive cutting table control input map 4470 is a predictive map 264. The functional predictive cutting table control input map 4470, in one example, predicts cutting table control input at different locations in a field. The functional predictive cutting table control input map 4470 may be provided to control zone generator 313, control system 314, or both. Control zone generator 313 generates control zones and incorporates those control zones into the functional predictive cutting table control input map 4470 to produce a predictive control zone map 265, that is a functional predictive cutting table control input control zone map 4471.

One or both of functional predictive cutting table control input map 4470 and functional predictive cutting table control input control zone map 4471 may be provided to control system 314, which generates control signals to control one or more of the controllable subsystems 316 based upon the functional predictive cutting table control input map 4470, the functional predictive cutting table control input control zone map 4471, or both.

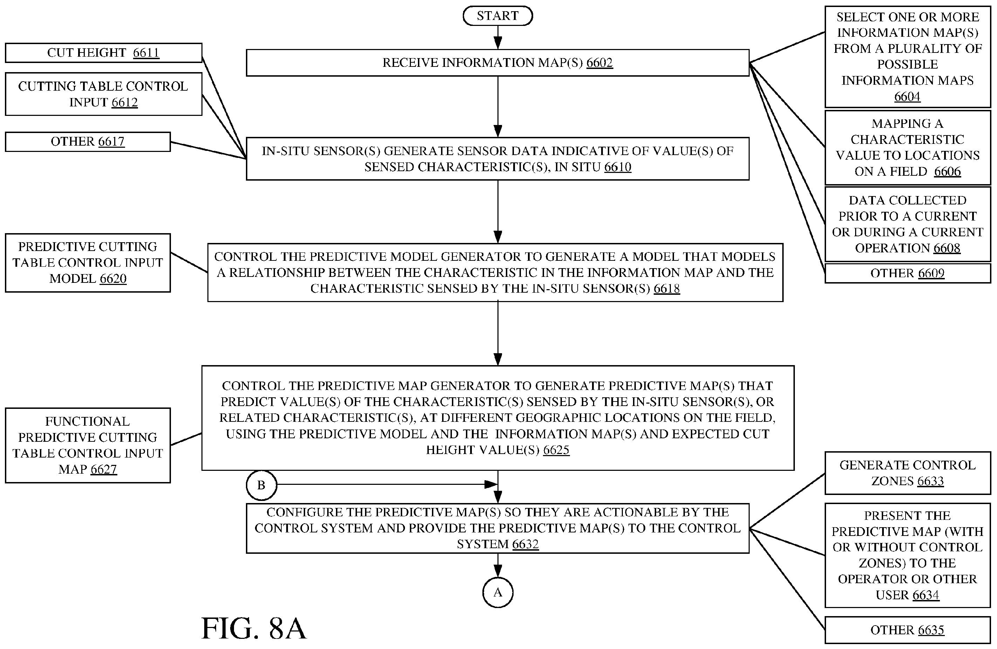

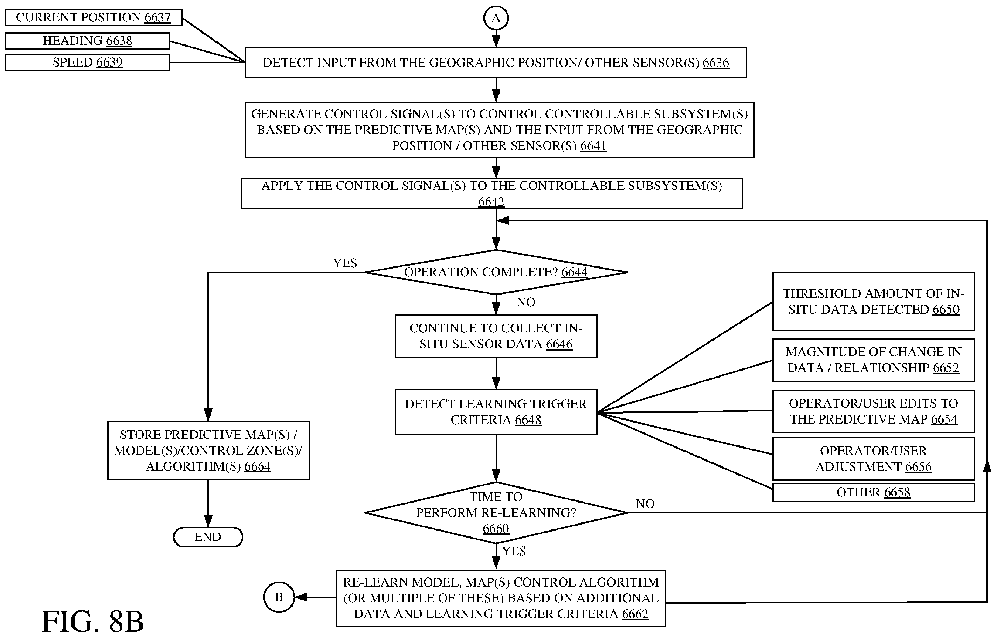

FIGS. 8A-8B (collectively referred to herein as FIG. 8) show a flow diagram illustrating one example of the operation of agricultural harvesting system architecture 300 in generating a predictive model and a predictive map

At block 6602, agricultural system 300 receives one or more information maps 358. Examples of information maps 358 or receiving information maps 358 are discussed with respect to blocks 6604, 6606, 6608, and 6609. As discussed above, information maps 358 map values of a variable, corresponding to a characteristic, to different locations in the field, as indicated at block 6606. As indicated at block 6604, receiving the information maps 358 may involve selecting one or more of a plurality of possible information maps 358 that are available. For instance, one information map 358 may be a vegetative index map, such as vegetative index map 430. Another information map 358 may be a crop height map, such as crop height map 431. Another information map 358 may be a genotype map, such as genotype map 432. Another information map 358 may be a seeding map, such as seeding map 433. Information maps 358 may include various other types of maps that map various other characteristics, such as other maps 439.

The process by which one or more information maps 358 are selected can be manual, semi-automated, or automated. The information maps 358 can be based on data collected prior to a current operation. For instance, the data may be collected based on aerial images taken during a previous year, or earlier in the current season, or at other times. The data may be based on data detected in ways other than using aerial images. For instance, the data may be collected during a previous operation on the worksite, such an operation during a previous year, or a previous operation earlier in the current season, or at other times. The machines performing those previous operations may be outfitted with one or more sensors that generate sensor data indicative of one or more characteristics. For example, the sensed operating parameters during a previous seeding operation or sensed characteristics during a spraying operation earlier in the year may be used as data to generate the information maps 358. In other examples, and as described above, the information maps 358 may be predictive maps having predictive values. The predictive information map 358 can be generated by predictive map generator 312 based on a model generated by predictive model generator 310. The data for the information maps 358 can be obtained by agricultural system 300 using communication system 306 and stored in data store 302. The data for the information maps 358 can be obtained by agricultural system 300 using communication system 306 in other ways as well, and this is indicated by block 6609 in the flow diagram of FIG. 8.

At block 6610, as agricultural harvester 100 is operating, in-situ sensors 308 generate sensor data indicative of one or more in-situ data values indicative of a characteristic. For example, header/cutting height sensors 382 generate sensor data indicative of one or more in-situ data values indictive of one or more cut height values, as indicated by block 6611. Control input sensors 390 generate sensor data indicative of one or more in-situ data values indicative of one or more cutting table control inputs, as indicated by block 612. Various other in-situ sensors 308 or geographic position sensors 304, or both, generate sensor data indicative of one or more in-situ data values indicative of one or more other characteristic values, as indicated by block 617.

In some examples, data from in-situ sensors 308 is georeferenced using position, heading, or speed data, as well as machine dimension information, sensor parameter information, sensor position information, etc.

At block 6618, predictive model generator 310 controls one or more of the model generators 4441, 4442, 4443, 4444, 4445, and 4449 to generate a model that models the relationship between the mapped values, such as the vegetative index values, the crop height values, the genotype values, the seeding characteristic values, and the other characteristic values contained in the respective information map, the in-situ values of cut height sensed by in-situ sensors 308, and the in-situ values of cutting table control input sensed by in-situ sensors 308. Predictive model generator 310 generates a predictive cutting table control input model 4451 that predicts values of cutting table control input based on one or more of vegetative index values, crop height values, genotype values, seeding characteristic values, and other characteristic values, and expected cut height values, as indicated by block 6620.

At block 6625, the relationship(s) or model(s) generated by predictive model generator 310 are provided to predictive map generator 312. Predictive map generator generates a functional predictive cutting table control input map 4470 that predictive cutting table control input values at different geographic locations in a field at which agricultural harvester 100 is operating using the predictive cutting table control input model 4451, one or more information maps 358, such as vegetative index 430, crop height map 431, genotype map 432, seeding map 433, and another map 439, and expected cut height values. Generating a predictive cutting table control input map, such as functional predictive cutting table control input map 4470, is indicated by block 6627.

It should be noted that, in some examples, the functional predictive cutting table control input map 4470 may include two or more different map layers. Each map layer may represent a different data type, for instance, a functional predictive cutting table control input map 4470 that provides two or more of a map layer that provides predictive cutting table control input based on vegetative index values from vegetative index map 430 and expected cut height values, a map layer that provides predictive cutting table control input based on crop height values from crop height map 431 and expected cu height values, a map layer that provides predictive cutting table control input based on genotype values from genotype map 432 and expected cut height values, a map layer that provides predictive cutting table control input based on seeding characteristic values from seeding map 433 and expected cut height values, and a map layer that provides predictive cutting table control input based on other characteristic values from other map 439 and expected cut height values. Additionally, or alternatively, functional predictive cutting table control input map 4470 can include a map layer that provides predictive cutting table control input based on one or more of vegetative index values from vegetative index map 430, crop height values from crop height map 431, genotype values from genotype map 432, seeding characteristic values from seeding map 433, and other characteristic values from an other map 439 and expected cut height values.

At block 6632, predictive map generator 312 configures the functional predictive cutting table control input map 4470 so that the functional predictive cutting table control input map 4470 is actionable (or consumable) by control system 314. Predictive map generator 312 can provide the functional predictive cutting table control input map 4470 to the control system 314 or to control zone generator 313, or both. Some examples of the different ways in which the functional predictive cutting table control input map 4471 can be configured or output are described with respect to blocks 6632, 6633, 6634, and 6635. For instance, predictive map generator 312 configures the functional predictive cutting table control input map 4470 so that the functional predictive cutting table control input map 4470 includes values that can be read by control system 314 and used as the basis for generating control signals for one or more of the different controllable subsystems 316 of mobile machine 100, as indicated by block 6632.

In one example, at block 6633, control zone generator 313 can divide the functional predictive cutting table control input map 4470 into control zones based on the values on the functional predictive cutting table control input map 4470 to generate functional predictive cutting table control input control zone map 4471. Contiguously-geolocated values that are within a threshold value of one another can be grouped into a control zone. The threshold value can be a default threshold value, or the threshold value can be set based on an operator input, based on an input from an automated system, or based on other criteria. A size of the zones may be based on a responsiveness of the control system 314, the controllable subsystems 316, based on wear considerations, or on other criteria.

At block 6634, predictive map generator 312 configures the functional predictive cutting table control input map 4470 or functional predictive cutting table control input control zone map 4471, or both, for presentation to an operator or other user. When presented to an operator or other user, the presentation of the functional predictive cutting table control input map 4470 or the functional predictive cutting table control input control zone map 4471, or both, may contain one or more of the predictive values on the functional predictive map 4470 correlated to geographic location, the control zones of the functional predictive control zone map 4471 correlated to geographic location, and settings values or control parameters that are used based on the predicted values on the functional predictive map 4470 or control zones on the functional predictive control zone map 4471. The presentation can, in another example, include more abstracted information or more detailed information. The presentation can also include a confidence level that indicates an accuracy with which the predictive values on the map 4470 or the control zones one the one or more map 4471 conform to measured values that may be measured by sensors on agricultural harvester 100 as agricultural harvester 100 operates at the field. Further where information is presented to more than one location, an authentication and authorization system can be provided to implement authentication and authorization processes. For instance, there may be a hierarchy of individuals that are authorized to view and change maps and other presented information. By way of example, an on-board display device may show the maps in near real time locally on the machine, or the maps may also be generated at one or more remote locations, or both. In some examples, each physical display device at each location may be associated with a person or a user permission level. The user permission level may be used to determine which display elements are visible on the physical display device and which values the corresponding person may change. As an example, a local operator of mobile machine 100 may be unable to see the information corresponding to the functional predictive map 4470 or make any changes to machine operation. A supervisor, such as a supervisor at a remote location, however, may be able to see the functional predictive map 4470 on the display but be prevented from making any changes. A manager, who may be at a separate remote location, may be able to see all of the elements on the functional predictive map 4470 and also be able to change the functional predictive map 4470. In some instances, the functional predictive map 4470 accessible and changeable by a manager located remotely may be used in machine control. This is one example of an authorization hierarchy that may be implemented. The functional predictive map 4470 or the functional predictive control zone map 4471, or both, can be configured in other ways as well, as indicated by block 6635.

At block 6636, input from geographic position sensors 304 and other in-situ sensors 308 are received by the control system 314. Particularly, at block 6637, control system 314 detects an input from the geographic position sensors 304 identifying a geographic location of agricultural harvester 100. Block 6638 represents receipt by the control system 314 of sensor inputs indicative of trajectory or heading of agricultural harvester 100, and block 6639 represents receipt by the control system 314 of a speed of agricultural harvester 100.

At block 6641, control system 314 generates control signals to control the controllable subsystems 316 based on the functional predictive map 4470 the functional predictive control zone map 4471, or both, and the input from the geographic position sensor 304 and any other in-situ sensors 308. In one example, at block 6641, control system generates control signals to control the controllable subsystems 316 based on the functional predictive cutting table control input map 4470 or the functional predictive cutting table control input control zone map 4471, or both, and the input from the geographic position sensor 304, and any other in-situ sensors 308.

At block 6642, control system 314 applies the control signals to the controllable subsystems 316. It will be appreciated that the particular control signals that are generated, and the particular controllable subsystems 316 that are controlled, may vary based upon one or more different things. For example, the control signals that are generated and the controllable subsystems 316 that are controlled may be based on the type of the functional predictive map 4470 or the functional predictive control zone map 4471, or both, that are being used. Similarly, the control signals that are generated and the controllable subsystems 316 that are controlled and the timing of the control signals can be based on various latencies of agricultural harvester 100 and the responsiveness of the controllable subsystems 316.

By way of example, propulsion controller 331 of control system 314 can generate control signals to control propulsion subsystem 350 to control one or more propulsion parameters of agricultural harvester 100, such as one or more of the speed at which the agricultural harvester 100 travels, the deceleration of agricultural harvester 100, and the acceleration of agricultural harvester 100, based on the functional predictive map 4470 or the functional predictive control zone map 4471, or both.

In another example, path planning controller 334 of control system 314 can generate control signals to control steering subsystem 352 to control a route parameter of agricultural harvester 100, such as one or more of a commanded path at the field over which agricultural harvester 100 travels, and the steering of agricultural harvester 100, based on the functional predictive map 4470 or the functional predictive control zone map 4471, or both.

In another example, cutting table controller 335 of control system 314 can generate control signals to control cutting table subsystem 340 to control the position (e.g., fore-to-aft position) of cutting table 104, and thus cutter 113, based on the functional predictive map 4470 or the functional predictive control zone map 4471, or both. For example, cutting table controller 335 can generate control signals to control one or more cutting table actuators 342 to control the position (e.g., fore-to-aft position) of cutting table 104, and thus cutter 113, based on one or more of the functional predictive cutting table control input map 4470 and functional predictive cutting table control input control zone map 4471. For instance, cutting table controller 335 can generate control signals to control one or more cutting table actuators 342 based on one or more of the maps 4470 and 4471, along with various other inputs, such as inputs from geographic position sensors 304 and inputs from heading/speed sensors 325.

In another example, reel controller 337 of control system 314 can generate control signals to control reel actuators 346 to control parameters of the reel 164, such as the height of the reel 164, the fore-to-aft position of the reel 164, the speed of the reel 164, as well as the position of the reel fingers 117 of reel 164. Reel controller 337 can generate control signals based on the functional predictive map 4470 or the functional predictive control zone map 4471, or both.

In another example, header controller 338 of control system 314 can generate control signals to control header actuators 345 to control parameters of the header 102, such as the height of header 102, the tilt of header 102, or the roll of header 102. Header controller 338 can generate control signals based on the functional predictive map 4470 or the functional predictive control zone map 4471, or both.

In another example, interface controller 330 of control system 314 can generate control signals to control an interface mechanism (e.g., 218 or 364) to generate a display, alert, notification, or other indication based on or indicative of the functional predictive map 4470 or the functional predictive control zone map 4471, or both.

In another example, communication system controller 329 of control system 314 can generate control signals to control communication system 306 to communicate the functional predictive mas 4470 or the functional predictive control zone map 4471, or both, to another item of agricultural system 300 (e.g., remote computing systems 368 or user interfaces 364).

These are merely examples. Control system 314 cam generate various other control signals to control various other items of mobile machine 100 (or agricultural system 300) based on the functional predictive map 4470 or the functional predictive control zone map 4471, or both.

At block 6644, a determination is made as to whether the operation has been completed. If the operation is not completed, the processing advances to block 646 where in-situ sensor data from geographic position sensor 304 and in-situ sensors 308 (and perhaps other sensors) continue to be read.

In some examples, at block 6648, agricultural system 300 can also detect learning trigger criteria to perform machine learning on the functional predictive map 4470, the functional predictive control zone map 4471, the predictive model 4451, the zones generated by control zone generator 313, one or more control algorithms implemented by the controllers in the control system 314, and other triggered learning.

The learning trigger criteria can include any of a wide variety of different criteria. Some examples of detecting trigger criteria are discussed with respect to blocks 6650, 6652, 6654, 6656, and 6658. For instance, in some examples, triggered learning can involve recreation of a relationship used to generate a predictive model when a threshold amount of in-situ sensor data are obtained from in-situ sensors 308. In such examples, receipt of an amount of in-situ sensor data from the in-situ sensors 308 that exceeds a threshold triggers or causes the predictive model generator 310 to generate a new predictive model that is used by predictive map generator 312. Thus, as agricultural harvester 100 continues an operation, receipt of the threshold amount of in-situ sensor data from the in-situ sensors 308 triggers the creation of a new relationship represented by a new predictive model (e.g., new model 4451) generated by predictive model generator 310. Further, a new functional predictive map 4470 or a new functional predictive control zone map 4471, or both, can be generated using the new model 4451. Block 6650 represents detecting a threshold amount of in-situ sensor data used to trigger creation of a new predictive model.

In other examples, the learning trigger criteria may be based on how much the in-situ sensor data from the in-situ sensors 308 are changing, such as over time or compared to previous values. For example, if variations within the in-situ sensor data (or the relationship between the in-situ sensor data and the information in the one or more information maps 358) are within a selected range or is less than a defined amount, or below a threshold value, then a new predictive model is not generated by the predictive model generator 310. As a result, the predictive map generator 312 does not generate a new functional predictive map, a new functional predictive control zone map, or both. However, if variations within the in-situ sensor data are outside of the selected range, are greater than the defined amount, or are above the threshold value, for example, then the predictive model generator 310 generates a new model using all or a portion of the newly received in-situ sensor data that the predictive map generator 312 uses to generate a new functional predictive map which can be provided to control zone generator 313 for the creation of a new functional predictive control zone map. At block 6652, variations in the in-situ sensor data, such as a magnitude of an amount by which the data exceeds the selected range or a magnitude of the variation of the relationship between the in-situ sensor data and the information in the one or more information maps, can be used as a trigger to cause generation of one or more of a new predictive model, a new functional predictive map, and a new functional predictive control zone map. Keeping with the examples described above, the threshold, the range, and the defined amount can be set to default values; set by an operator or user interaction through a user interface; set by an automated system; or set in other ways.

Other learning trigger criteria can also be used. For instance, if predictive model generator 310 switches to a different information map (different from the originally selected information map), then switching to the different information map may trigger re-learning by predictive model generator 310, predictive map generator 312, control zone generator 313, control system 314, or other items. In another example, transitioning of agricultural harvester 100 to a different topography or to a different control zone may be used as learning trigger criteria as well.

In some instances, operator 360 or user 366 can also edit the functional predictive map 4470 or the functional predictive control zone map 4471, or both. The edits can change value(s) on the functional predictive map 4470, change a size, shape, position, or existence of control zone(s) on the functional predictive control zone map 4471, or both. Block 6654 shows that edited information can be used as learning trigger criteria.

In some instances, it may also be that operator 360 or user 366 observes that automated control of a controllable subsystem 316, is not what the operator or user desires. In such instances, the operator 360 or user 366 may provide a manual adjustment to the controllable subsystem 316 reflecting that the operator 360 or user 366 desires the controllable subsystem 316 to operate in a different way than is being commanded by control system 314. Thus, manual alteration of a setting by the operator 360 or user 366 can cause one or more of predictive model generator 310 to generate a new model, predictive map generator 312 to generate a new functional predictive map, control zone generator 313 to generate one or more new control zones on a functional predictive control zone map, and control system 314 to relearn a control algorithm or to perform machine learning on one or more of the controller components 329 through 339 in control system 314 based upon the adjustment by the operator 360 or user 366, as shown in block 6656. Block 6658 represents the use of other triggered learning criteria.

In other examples, relearning may be performed periodically or intermittently based, for example, upon a selected time interval such as a discrete time interval or a variable time interval, as indicated by block 6660.

If relearning is triggered, whether based upon learning trigger criteria or based upon passage of a time interval, as indicated by block 6660, then one or more of the predictive model generator 310, predictive map generator 312, control zone generator 313, and control system 314 performs machine learning to generate one or more new predictive models, one or more new predictive maps, one or more new control zones, and one or more new control algorithms, respectively, based upon the learning trigger criteria. The new predictive model(s), the new predictive map(s), the new control zone(s), and the new control algorithm(s) are generated using any additional data that has been collected since the last learning operation was performed. Performing relearning is indicated by block 6662.

If the operation has been completed, operation moves from block 6662 to block 6664 where one or more of the functional predictive map(s), functional predictive control zone map(s), the predictive model(s), the control zone(s), and the control algorithm(s), are stored. The functional predictive map(s), functional predictive control zone map(s), predictive model(s), control zone(s), and control algorithm(s), may be stored locally on data store 302 or sent to a remote system using communication system 306 for later use.

If the operation has not been completed, operation moves from block 6662 to block 6632 such that the one or more of the new predictive model(s), the new functional predictive map(s), the new functional predictive control zone map(s), the new control zone(s), and the new control algorithm(s) can be used in the control of agricultural harvester 100.

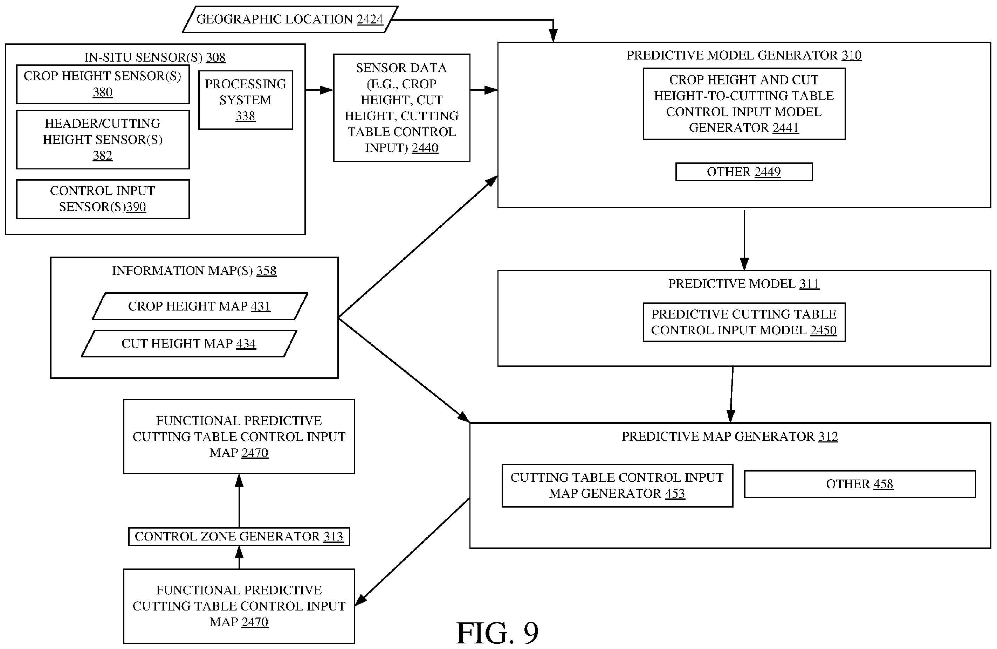

FIG. 9 is a block diagram of a portion of the agricultural system architecture 300 shown in FIG. 4. Particularly, FIG. 9 shows, among other things, examples of the predictive model generator 310 in more detail. FIG. 9 also illustrates information flow among the various components shown. In-situ sensors 308 illustratively include crop height sensors 380, header/cutting height sensors 382, control input sensors 390, as well as processing system 338. In some examples, processing system 338 is separate from in-situ sensors 308 (such as the example shown in FIG. 4). In some instances, one or more of crop height sensors 380, header/cutting height sensors 382, and control input sensors 390 may be located on-board agricultural harvester 100. The processing system 338 processes sensor data generated from crop height sensors 380 to generate processed sensor data 2440 indicative of crop height values. The processing system 338 processes sensor data generated from header/cutting height sensors 382 to generate processed sensor data 2440 indicative of cutting height values. The processing system 338 processes sensor data generated from control input sensors 390 to generate processed sensor data 2440 indicative of cutting table control input values.

The predictive model generator 310 receives the processed sensor data 2440 as well as geographic location information 2424, such as a geographic location or indication of a geographic location, such as from geographic position sensors 304. Geographic location information 2424 illustratively represent the geographic location(s) of value(s) detected by in-situ sensors 308. In some examples, the geographic position of the agricultural harvester 100, as detected by geographic position sensors 304, will not be the same as the geographic position on the field to which a value detected by in-situ sensors 308 corresponds. For example, crop height sensors 380 may detect crop height ahead of agricultural harvester 100. Thus, the geographic position of agricultural harvester 100 at the time the height of the crop is detected may not be the geographic location of the crop that is detected to which the height corresponds. It will be appreciated, that the geographic position indicated by geographic position sensor 304, along with timing circuitry, machine speed and heading, machine dimensions, sensor position (e.g., relative to geographic position sensor), sensor parameters (e.g., field of view), can be used to derive a geographic location at the field to which a value a detected by an in-situ sensor 308 corresponds.

As shown in FIG. 9, the example predictive model generator 310 includes a crop height and cut height-to-cutting table control input model generator 2441. In other examples, the predictive model generator additional or different components than those shown in the example of FIG. 9. Consequently, in some examples, the predictive model generator 310 may include other items 2449 as well, which may include other types of predictive model generators to generate other types of models.

Crop height and cut height-to-cutting table control input model generator 2441 identifies a relationship between crop height value(s) detected in in-situ sensor data 2440, at geographic location(s) to which the crop height value(s) correspond, cut height value(s) detected in in-situ sensor data 2440 corresponding to the same geographic location(s) to which the crop height value(s) correspond, and cutting table control input value(s) detected in in-situ sensor data 2440 corresponding to the same geographic location(s) to which the crop height value(s) and the cut height value(s) correspond. Based on this relationship established by crop height and cut height-to-cutting table control input model generator 2441, crop height and cut height-to-cutting table control input model generator 2441 generates a predictive cutting table control input model 2451. The predictive cutting table control input model 2451 can be used to predict cutting table control input value(s) based on detected crop height value(s) and detected cut height value(s). Thus, the predictive cutting table control input model 2451 is configured to receive, as model inputs, a crop height value and a cut height value and to generate, as a model output, a corresponding predictive cutting table control input. Thus, the predictive cutting table control input model 2451 can be used to control the cutting table subsystem 340 to control the position (e.g., fore-to-aft position) of cutting table 104, and thus cutter 113, based on input crop height (e.g., crop height detected by in-situ crop height sensors 380) and on input cut height (e.g., cut height detected by in-situ header/cutting height sensors 382).

Thus, for a given geographic location in the field, a cutting table control input value can be predicted at the given location based on the predictive cutting table control input model 2441, a crop height value (e.g., a crop height value detected by crop height sensors 380), a cut height value (e.g., a cut height value detected by header/cutting height sensors 382).

The predictive cutting table control input model 2451 can be provided to control system 314, to operator 360 (such as via presentation on operator interface 218), to a user 366 (such as via presentation on user interface 364), or to another component of agricultural system 300, such as remote computing systems 368.

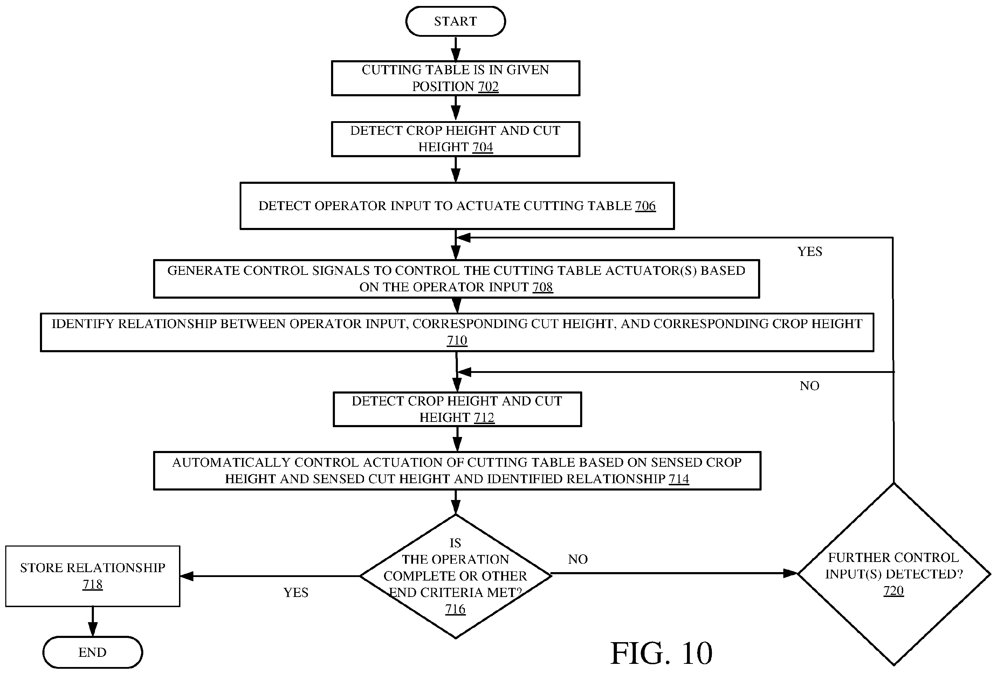

FIG. 10 shows a flow diagram illustrating one example of the operation of agricultural harvesting system architecture 300 in generating a predictive model.

At block 702, the cutting table 104 is in a position (e.g., a fore-to-aft position). The agricultural harvester 100 may already be harvesting at a field or may be entering a field to begin harvesting at the field.

At block 704, a crop height value, corresponding to a geographic location, is detected by crop height sensors 380 and a cut height value, corresponding to the geographic location of the detected crop height value, is detected by header/cutting height sensors 382.

At block 706, a cutting table control input value, corresponding to the geographic location of the detected crop height value and the detected cut height value, is detected by control input sensors 390. The cutting table control input value may be a cutting table position setting (or a cutter position setting) that is used to control cutting table subsystem 340 to drive the cutting table 104, and thus the cutter 113, to a given position (e.g., a given fore-to-aft position). The cutting table position setting may be a specific cutting table position (or cutter position), such as a specific fore-to-aft position, or may be a more general setting, such as movement delta command that indicates an increase (extension) or decrease (retraction) in fore-to-aft position.

At block 708, the cutting table control input value is used by control system 314 (e.g., cutting table controller 335) to control cutting table subsystem 340 to control cutting table actuators 342 to drive the cutting table 104, and thus the cutter, to a position based on the cutting table control input value.

At block 710, crop height and cut height-to-cutting table control input model generator 2441, of predictive model generator 310, identifies a relationship between the detected crop height, the detected cut height, and the detected cutting table control input. Based on the relationship, crop height and cut height-to-cutting table control input model generator 2441 generates a predictive cutting table control input model 2450.

At block 712, a crop height value, corresponding to a geographic location, is detected by crop height sensors 380 and a cut height value, corresponding to the geographic location of the detected crop height value, is detected by header/cutting height sensors 382.

At block 714, control system 314 (e.g., cutting table controller 335) automatically generates a control signal and applies the control signal to control cutting table subsystem 340 (e.g., cutting table actuators 342) to drive cutting table 104, and thus cutter 113, to a given position (e.g., given fore-to-aft position) based on the detected crop height and detected cut height and the predictive cutting table control input model 2450.

At block 716 it is determined if the operation has been completed. If the operation has been completed, operation moves from block 716 to block 718 where the predictive cutting table control input model 2450 is stored. The predictive cutting table control input model 2450 may be stored locally on data store 302 or sent to a remote system using communication system 306 for later use.

If the operation has not been completed, operation moves from block 716 to block 720 where it is determined if further cutting table control inputs input by an operator 360 have been detected. For instance, it may be that the operator 360 wishes to alter the cutting table setting that is commanded based on the model 2450. In such a case, operation returns to block 708 where the control system 314 generates a control signal to control the cutting table subsystem 340 based on the further detected cutting table control input and then to block 710 where model generator 2441 generates a new predictive cutting table control input model 2450 based further on the further cutting table control input and the corresponding crop height and cut height. Operation then proceeds at block 712 where a crop height value, corresponding to a geographic location, is detected by crop height sensors 380 and a cut height value, corresponding to the geographic location of the detected crop height value, is detected by header/cutting height sensors 382. Operation then proceeds at block 714 where control system 314 (e.g., cutting table controller 335) automatically generates and applies a control signal to control cutting table subsystem 340 (e.g., cutting table actuators 342) to drive cutting table 104, and thus cutter 113, to a given position (e.g., given fore-to-aft position) based on the detected crop height and detected cut height and the new predictive cutting table control input model 2450.

If, at block 720, no additional cutting table control inputs have been detected, the operation returns to block 712 where a crop height value, corresponding to a geographic location, is detected by crop height sensors 380 and a cut height value, corresponding to the geographic location of the detected crop height value, is detected by header/cutting height sensors 382. Operation then proceeds at block 714 where control system 314 (e.g., cutting table controller 335) automatically generates and applies a control signal to control cutting table subsystem 340 (e.g., cutting table actuators 342) to drive cutting table 104, and thus cutter 113, to a given position (e.g., given fore-to-aft position) based on the detected crop height and detected cut height and the predictive cutting table control input model 2450.

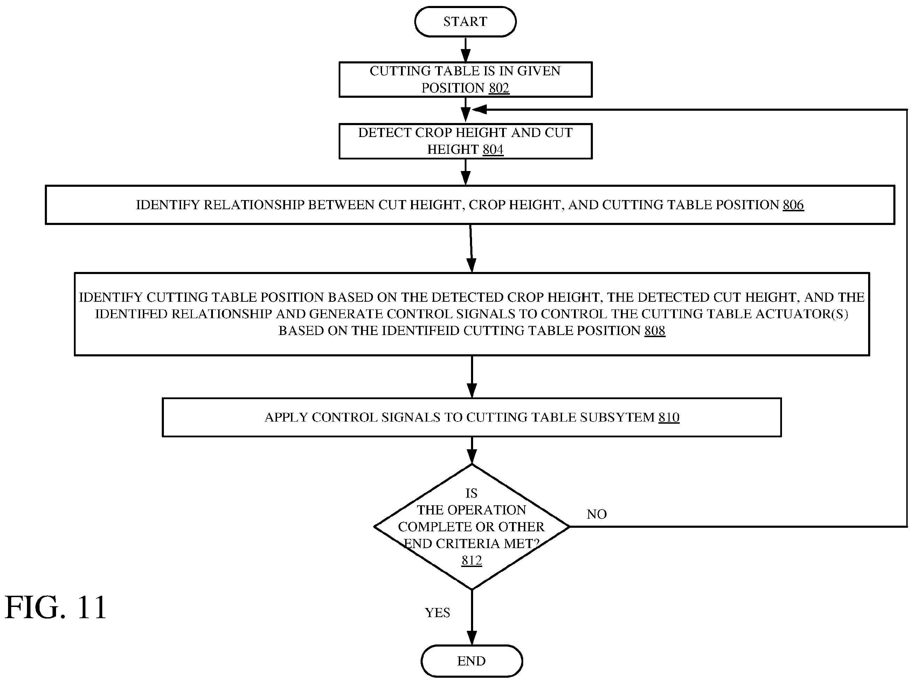

FIG. 11 shows a flow diagram illustrating one example of the operation of agricultural harvesting system architecture 300 in controlling agricultural harvester 100.

At block 802, the cutting table 104 is in a given position (e.g., given fore-to-aft position). The agricultural harvester 100 may already be harvesting at a field or may be entering a field to begin harvesting at the field.

At block 804, a crop height value, corresponding to a geographic location, is detected by crop height sensors 380 and a cut height value, corresponding to the geographic location of the detected crop height value, is detected by header/cutting height sensors 382.

At block 806, control system 314 (e.g., cutting table controller 335) identifies a relationship between crop height, cut height, and cutting table position. For example, at block 804, control system 314 may identify, as the relationship, a relationship 318 in data store 302.

At block 808, control system 314 (e.g., cutting table controller 335) identifies a cutting table position (e.g., a cutting table fore-to-aft position) based on the detected crop height, the detected cut height, and the identified relationship (e.g., relationship 318) and generates a control signal to control cutting table subsystem 340 (e.g., cutting table actuators 342) to drive the cutting table 104, and thus cutter 113, to the identified position (e.g., identified fore-to-aft position).

At block 810, control system 314 (e.g., cutting table controller 335) applies the control signal to the cutting table subsystem 340.

At block 812, it is determined if the operation has been completed. If the operation has not been completed, operation returns to block 804. If, at block 812, the operation has been completed then processing ends.

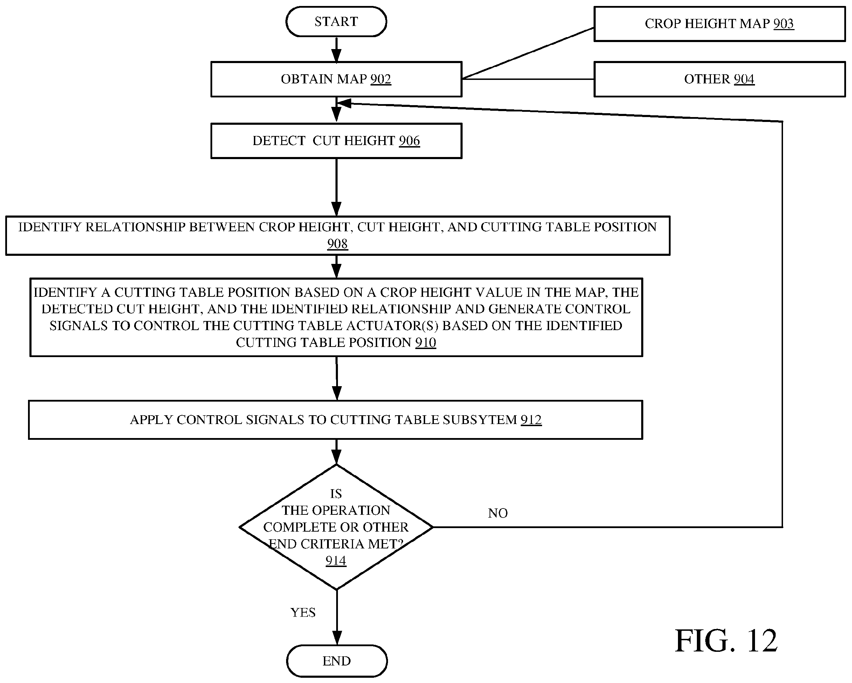

FIG. 12 shows a flow diagram illustrating one example of the operation of agricultural harvesting system architecture 300 in controlling agricultural harvester 100.

At block 902, agricultural system 300 obtains one or more maps. For example, agricultural system 300 obtains one or more crop height maps, as indicated by block 903. The crop height map maps crop height values to different geographic locations in the field at which agricultural harvester 100 is operating. The crop height map can be crop height map 431. The crop height map can be functional predictive crop height map 460 or functional predictive crop height control zone map 461, or both. The crop height map can have predictive values of crop height, such as predictive crop height values based on a predictive crop height model (e.g., 450), based on historical crop height values, based on crop growth models, based on seed provider data, or based on various other data. The crop height map can have measured values of crop height, such as crop height values derived from sensor readings of crop height during a prior operation on the field (e.g., prior spraying operation) or during a survey of the field such as an aerial survey. As indicated by block 904, agricultural system 300 can obtain various other maps as well, including, but not limited to, one or more of the information maps 358 and functional predictive maps 263.

At block 906, header/cutting height sensors 382 detect a cut height value corresponding to a geographic location.

At block 908, control system 314 (e.g., cutting table controller 335) identifies a relationship between crop height, cut height, and cutting table position. For example, at block 908, control system 314 may identify, as the relationship, a relationship 318 in data store 302. In another example, control system 314 may identify, as the relationship, another type of relationship, such as a predictive cutting table control input model, for instance predictive cutting table control input model 2450.

At block 910, control system 314 (e.g., cutting table controller 335) identifies a cutting table position (e.g., a cutting table fore-to-aft position) based on a crop height value from the obtained crop height map, the detected cut height, and the identified relationship and generates a control signal to control cutting table subsystem 340 (e.g., cutting table actuators 342) to drive the cutting table 104, and thus cutter 113, to the identified position (e.g., identified fore-to-aft position).

At block 912, control system 314 (e.g., cutting table controller 335) applies the control signal to the cutting table subsystem 340.

At block 914, it is determined if the operation has been completed. If the operation has not been completed, operation returns to block 906. In some examples, depending on the map obtained, operation may return to block 902. For instance, if the obtained map is a functional predictive crop height map 460 or a functional predictive crop height control zone map 461, or both, that map may be updated (or made new) throughout the operation, and thus, agricultural system 300 may obtain the updated (or new) map. If the operation has been completed then processing ends.

The examples herein describe the generation of a predictive model and, in some examples, the generation of a functional predictive map based on the predictive model. The examples described herein are distinguished from other approaches by the use of a model which is at least one of multi-variate or site-specific (i.e., georeferenced, such as map-based). Furthermore, the model is revised as the work machine is performing an operation and while additional in-situ sensor data is collected. The model may also be applied in the future beyond the current worksite. For example, the model may form a baseline (e.g., starting point) for a subsequent operation at a different worksite or the same worksite at a future time.

The revision of the model in response to new data may employ machine learning methods. Without limitation, machine learning methods may include memory networks, Bayes systems, decisions trees, Eigenvectors, Eigenvalues and Machine Learning, Evolutionary and Genetic Algorithms, Cluster Analysis, Expert Systems/Rules, Support Vector Machines, Engines/Symbolic Reasoning, Generative Adversarial Networks (GANs), Graph Analytics and ML, Linear Regression, Logistic Regression, LSTMs and Recurrent Neural Networks (RNNSs), Convolutional Neural Networks (CNNs), MCMC, Random Forests, Reinforcement Learning or Reward-based machine learning. Learning may be supervised or unsupervised.

Model implementations may be mathematical, making use of mathematical equations, empirical correlations, statistics, tables, matrices, and the like. Other model implementations may rely more on symbols, knowledge bases, and logic such as rule-based systems. Some implementations are hybrid, utilizing both mathematics and logic. Some models may incorporate random, nondeterministic, or unpredictable elements. Some model implementations may make uses of networks of data values such as neural networks. These are just some examples of models.

The predictive paradigm examples described herein differ from non-predictive approaches where an actuator or other machine parameter is fixed at the time the machine, system, or component is designed, set once before the machine enters the worksite, is reactively adjusted manually based on operator perception, or is reactively adjusted based on a sensor value.

The functional predictive map examples described herein also differ from other map-based approaches. In some examples of these other approaches, an a priori control map is used without any modification based on in-situ sensor data or else a difference determined between data from an in-situ sensor and a predictive map are used to calibrate the in-situ sensor. In some examples of the other approaches, sensor data may be mathematically combined with a priori data to generate control signals, but in a location-agnostic way; that is, an adjustment to an a priori, georeferenced predictive setting is applied independent of the location of the work machine at the worksite. The continued use or end of use of the adjustment, in the other approaches, is not dependent on the work machine being in a particular defined location or region within the worksite.

In examples described herein, the functional predictive maps and predictive actuator control rely on obtained maps and in-situ data that are used to generate predictive models. The predictive models are then revised during the operation to generate revised functional predictive maps and revised actuator control. In some examples, the actuator control is provided based on functional predictive control zone maps which are also revised during the operation at the worksite. In some examples, the revisions (e.g., adjustments, calibrations, etc.) are tied to regions or zones of the worksite rather than to the whole worksite or some non-georeferenced condition. For example, the adjustments are applied to one or more areas of a worksite to which an adjustment is determined to be relevant (e.g., such as by satisfying one or more conditions which may result in application of an adjustment to one or more locations while not applying the adjustment to one or more other locations), as opposed to applying a change in a blanket way to every location in a non-selective way.

In some examples described herein, the models determine and apply those adjustments to selective portions or zones of the worksite based on a set of a priori data, which, in some instances, is multivariate in nature. For example, adjustments may, without limitation, be tied to defined portions of the worksite based on site-specific factors such as topography, soil type, crop variety, soil moisture, as well as various other factors, alone or in combination. Consequently, the adjustments are applied to the portions of the field in which the site-specific factors satisfy one or more criteria and not to other portions of the field where those site-specific factors do not satisfy the one or more criteria. Thus, in some examples described herein, the model generates a revised functional predictive map for at least the current location or zone, the unworked part of the worksite, or the whole worksite.

As an example, in which the adjustment is applied only to certain areas of the field, consider the following. The system may determine that a detected in-situ characteristic value varies from a predictive value of the characteristic, such as by a threshold amount. This deviation may only be detected in areas of the field where the elevation of the worksite is above a certain level. Thus, the revision to the predictive value is only applied to other areas of the worksite having elevation above the certain level. In this simpler example, the predictive characteristic value and elevation at the point the deviation occurred and the detected characteristic value and elevation at the point the deviation cross the threshold are used to generate a linear equation. The linear equation is used to adjust the predictive characteristic value in areas of the worksite (which have not yet been operated on in the current operation, such as unharvested areas) in the functional predictive map as a function of elevation and the predicted characteristic value. This results in a revised functional predictive map in which some values are adjusted while others remain unchanged based on selected criteria, e.g., elevation as well as threshold deviation. The revised functional map is then used to generate a revised functional control zone map for controlling the machine.

As an example, without limitation, consider an instance of the paradigm described herein which is parameterized as follows.

One or more maps of the field are obtained, such as one or more of a vegetative index map, a crop height map, a genotype map, a seeding map, and another type of map.

In-situ sensors generate sensor data indicative of in-situ characteristic values, such as in-situ values of crop height.

A predictive model generator generates one or more predictive models based on the one or more obtained maps and the in-situ sensor data, such as a predictive crop height model.

A predictive map generator generates one or more functional predictive maps based on a model generated by the predictive model generator and the one or more obtained maps. For example, the predictive map generator may generate a functional predictive crop height map that maps predictive values of crop height to one or more locations on the worksite based on a predictive crop height model and the one or more obtained maps.

Control zones, which include machine settings values, can be incorporated into the functional predictive crop height map to generate a functional predictive crop height map with control zones.

As another example, without limitation, consider an instance of the paradigm described herein which is parameterized as follows.

One or more maps of the field are obtained, such as one or more of a vegetative index map, a crop height map, a genotype map, a seeding map, and another type of map.

In-situ sensors generate sensor data indicative of in-situ characteristic values, such as in-situ values of cutting table control input.

A predictive model generator generates one or more predictive models based on the one or more obtained maps and the in-situ sensor data, such as a predictive cutting table control input model.

A predictive map generator generates one or more functional predictive maps based on a model generated by the predictive model generator and the one or more obtained maps. For example, the predictive map generator may generate a functional predictive cutting table control input map that maps predictive values of cutting table control input to one or more locations on the worksite based on a predictive cutting table control input model and the one or more obtained maps.

Control zones, which include machine settings values, can be incorporated into the functional predictive cutting table control input map to generate a functional predictive cutting table control input map with control zones.

As another example, without limitation, consider an instance of the paradigm described herein which is parameterized as follows.

One or more maps of the field are obtained, such as one or more of a vegetative index map, a crop height map, a genotype map, a seeding map, and another type of map.

In-situ sensors generate sensor data indicative of in-situ characteristic values, such as in-situ values of cutting table control input and in-situ values of cut height.

A predictive model generator generates one or more predictive models based on the one or more obtained maps and the in-situ sensor data, such as a predictive cutting table control input model.

A predictive map generator generates one or more functional predictive maps based on a model generated by the predictive model generator and the one or more obtained maps. For example, the predictive map generator may generate a functional predictive cutting table control input map that maps predictive values of cutting table control input to one or more locations on the worksite based on a predictive cutting table control input model, the one or more obtained maps, and expected cut height values.

Control zones, which include machine settings values, can be incorporated into the functional predictive cutting table control input map to generate a functional predictive cutting table control input map with control zones.

Another example, without limitation, consider an instance of the paradigm described herein which is parameterized as follows.

In-situ sensors generate sensor data indicative of in-situ characteristic values, such as in-situ values of crop height, in-situ values of cut height, and in-situ values of cutting table control input.

A predictive model generator generates one or more predictive models based on the in-situ sensor data, such as a predictive cutting table control input model.

As the mobile machine continues to operate at the worksite, additional in-situ sensor data is collected. A learning trigger criteria can be detected, such as threshold amount of additional in-situ sensor data being collected, a magnitude of change in a relationship (e.g., the in-situ characteristic values varies to a certain [e.g., threshold] degree from a predictive value of the characteristic), and operator or user makes edits to the predictive map(s) or to a control algorithm, or both, a certain (e.g., threshold) amount of time elapses, as well as various other learning trigger criteria. The predictive model(s) are then revised based on the additional in-situ sensor data and, where applicable, the values from the obtained map(s). The functional predictive map(s) or the functional predictive control zone map(s), or both, are then revised based on the revised model(s) and the values in the obtained map(s).

The present discussion has mentioned processors and servers. In some examples, the processors and servers include computer processors with associated memory and timing circuitry, not separately shown. They are functional parts of the systems or devices to which they belong and are activated by and facilitate the functionality of the other components or items in those systems.

Also, a number of user interface displays have been discussed. The displays can take a wide variety of different forms and can have a wide variety of different user actuatable operator interface mechanisms disposed thereon. For instance, user actuatable operator interface mechanisms may include text boxes, check boxes, icons, links, drop-down menus, search boxes, etc. The user actuatable operator interface mechanisms can also be actuated in a wide variety of different ways. For instance, they can be actuated using operator interface mechanisms such as a point and click device, such as a track ball or mouse, hardware buttons, switches, a joystick or keyboard, thumb switches or thumb pads, etc., a virtual keyboard or other virtual actuators. In addition, where the screen on which the user actuatable operator interface mechanisms are displayed is a touch sensitive screen, the user actuatable operator interface mechanisms can be actuated using touch gestures. Also, user actuatable operator interface mechanisms can be actuated using speech commands using speech recognition functionality. Speech recognition may be implemented using a speech detection device, such as a microphone, and software that functions to recognize detected speech and execute commands based on the received speech.

A number of data stores have also been discussed. It will be noted the data stores can each be broken into multiple data stores. In some examples, one or more of the data stores may be local to the systems accessing the data stores, one or more of the data stores may all be located remote form a system utilizing the data store, or one or more data stores may be local while others are remote. All of these configurations are contemplated by the present disclosure.

Also, the figures show a number of blocks with functionality ascribed to each block. It will be noted that fewer blocks can be used to illustrate that the functionality ascribed to multiple different blocks is performed by fewer components. Also, more blocks can be used illustrating that the functionality may be distributed among more components. In different examples, some functionality may be added, and some may be removed.

It will be noted that the above discussion has described a variety of different systems, components, logic and interactions. It will be appreciated that any or all of such systems, components, logic and interactions may be implemented by hardware items, such as processors, memory, or other processing components, some of which are described below, that perform the functions associated with those systems, components, or logic, or interactions. In addition, any or all of the systems, components, logic and interactions may be implemented by software that is loaded into a memory and is subsequently executed by a processor or server or other computing component, as described below. Any or all of the systems, components, logic and interactions may also be implemented by different combinations of hardware, software, firmware, etc., some examples of which are described below. These are some examples of different structures that may be used to implement any or all of the systems, components, logic and interactions described above. Other structures may be used as well.

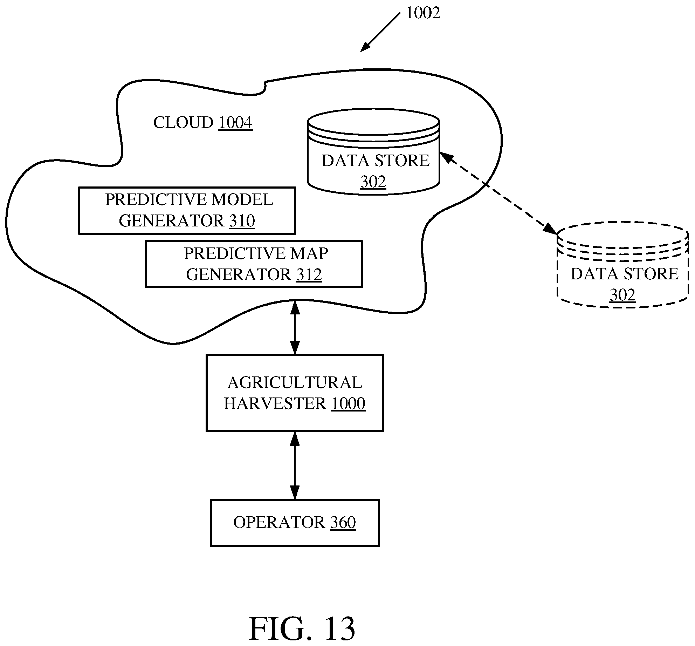

FIG. 13 is a block diagram of agricultural harvester 1000, which may be similar to agricultural harvester 100 shown in FIG. 4. The agricultural harvester 1000 communicates with elements in a remote server architecture 1002. In some examples, remote server architecture 1002 provides computation, software, data access, and storage services that do not require end-user knowledge of the physical location or configuration of the system that delivers the services. In various examples, remote servers may deliver the services over a wide area network, such as the internet, using appropriate protocols. For instance, remote servers may deliver applications over a wide area network and may be accessible through a web browser or any other computing component. Software or components shown in FIG. 4 as well as data associated therewith, may be stored on servers at a remote location. The computing resources in a remote server environment may be consolidated at a remote data center location, or the computing resources may be dispersed to a plurality of remote data centers. Remote server infrastructures may deliver services through shared data centers, even though the services appear as a single point of access for the user. Thus, the components and functions described herein may be provided from a remote server at a remote location using a remote server architecture. Alternatively, the components and functions may be provided from a server, or the components and functions can be installed on client devices directly, or in other ways.

In the example shown in FIG. 13, some items are similar to those shown in FIG. 4 and those items are similarly numbered. FIG. 13 specifically shows that predictive model generator 310 or predictive map generator 312, or both, may be located at a server location 1004 that is remote from the agricultural harvester 1000. Therefore, in the example shown in FIG. 13, agricultural harvester 1000 accesses systems through remote server location 1004. In other examples, various other items may also be located at server location 1004, such as data store 302, map selector 309, predictive model 311, functional predictive maps 263 (including predictive maps 264 and predictive control zone maps 265), control zone generator 313, control system 314, and processing system 338.

FIG. 13 also depicts another example of a remote server architecture. FIG. 13 shows that some elements of FIG. 4 may be disposed at a remote server location 1104 while others may be located elsewhere. By way of example, data store 302 may be disposed at a location separate from location 1004 and accessed via the remote server at location 1004. Regardless of where the elements are located, the elements can be accessed directly by agricultural harvester 1000 through a network such as a wide area network or a local area network; the elements can be hosted at a remote site by a service; or the elements can be provided as a service or accessed by a connection service that resides in a remote location. Also, data may be stored in any location, and the stored data may be accessed by, or forwarded to, operators, users or systems. For instance, physical carriers may be used instead of, or in addition to, electromagnetic wave carriers. In some examples, where wireless telecommunication service coverage is poor or nonexistent, another machine, such as a fuel truck or other mobile machine or vehicle, may have an automated, semi-automated or manual information collection system. As the agricultural harvester 1000 comes close to the machine containing the information collection system, such as a fuel truck prior to fueling, the information collection system collects the information from the agricultural harvester 1000 using any type of ad-hoc wireless connection. The collected information may then be forwarded to another network when the machine containing the received information reaches a location where wireless telecommunication service coverage or other wireless coverage is available. For instance, a fuel truck may enter an area having wireless communication coverage when traveling to a location to fuel other machines or when at a main fuel storage location. All of these architectures are contemplated herein. Further, the information may be stored on the agricultural harvester 1000 until the agricultural harvester 1000 enters an area having wireless communication coverage. The agricultural harvester 1000, itself, may send the information to another network.

It will also be noted that the elements of FIG. 4, or portions thereof, may be disposed on a wide variety of different devices. One or more of those devices may include an on-board computer, an electronic control unit, a display unit, a server, a desktop computer, a laptop computer, a tablet computer, or other mobile device, such as a palm top computer, a cell phone, a smart phone, a multimedia player, a personal digital assistant, etc.

In some examples, remote server architecture 1002 may include cybersecurity measures. Without limitation, these measures may include encryption of data on storage devices, encryption of data sent between network nodes, authentication of people or processes accessing data, as well as the use of ledgers for recording metadata, data, data transfers, data accesses, and data transformations. In some examples, the ledgers may be distributed and immutable (e.g., implemented as blockchain).

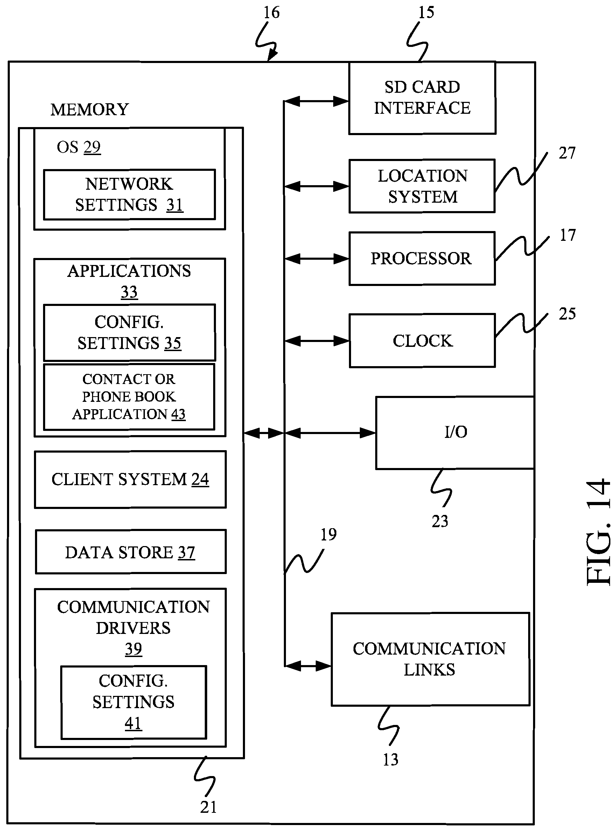

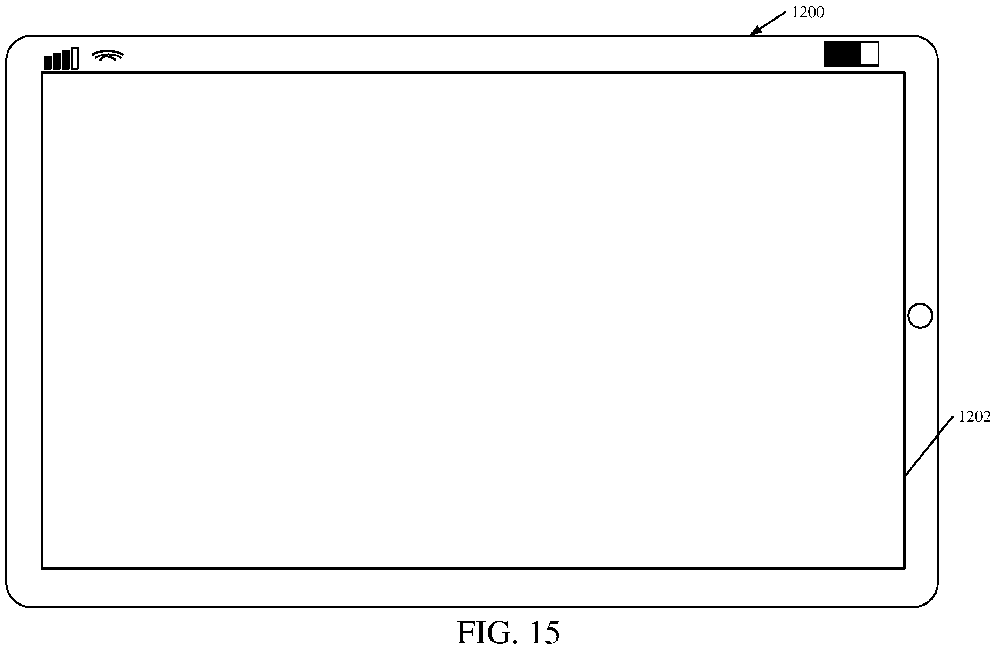

FIG. 14 is a simplified block diagram of one illustrative example of a handheld or mobile computing device that can be used as a user's or client's hand held device 16, in which the present system (or parts of it) can be deployed. For instance, a mobile device can be deployed in the operator compartment of agricultural harvester 100 for use in generating, processing, or displaying the maps discussed above. FIGS. 15-16 are examples of handheld or mobile devices.

FIG. 14 provides a general block diagram of the components of a client device 16 that can run some components shown in FIG. 4, that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from other FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 may also include computer storage media (described below). Memory 21 stores computer readable instructions that, when executed by processor 17, cause the processor to perform computer-implemented steps or functions according to the instructions. Processor 17 may be activated by other components to facilitate their functionality as well.

FIG. 15 shows one example in which device 16 is a tablet computer 1200. In FIG. 15, computer 1200 is shown with user interface display screen 1202. Screen 1202 can be a touch screen or a pen-enabled interface that receives inputs from a pen or stylus. Tablet computer 1200 may also use an on-screen virtual keyboard. Of course, computer 1200 might also be attached to a keyboard or other user input device through a suitable attachment mechanism, such as a wireless link or USB port, for instance. Computer 1200 may also illustratively receive voice inputs as well.

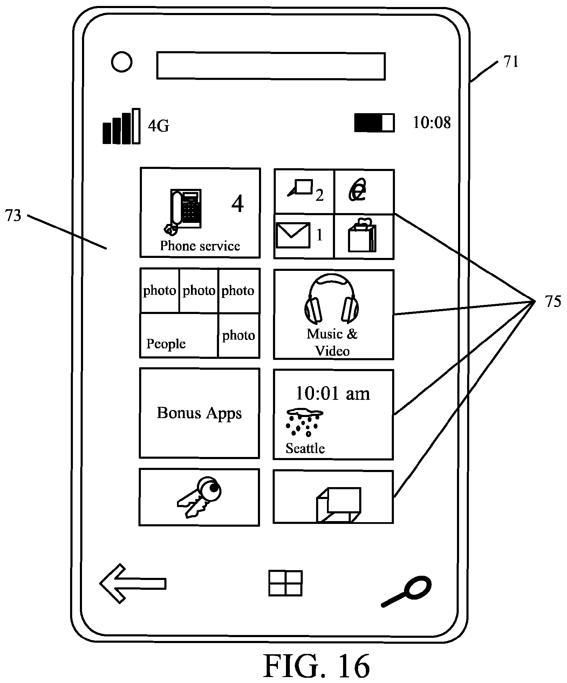

FIG. 16 is similar to FIG. 15 except that the device is a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

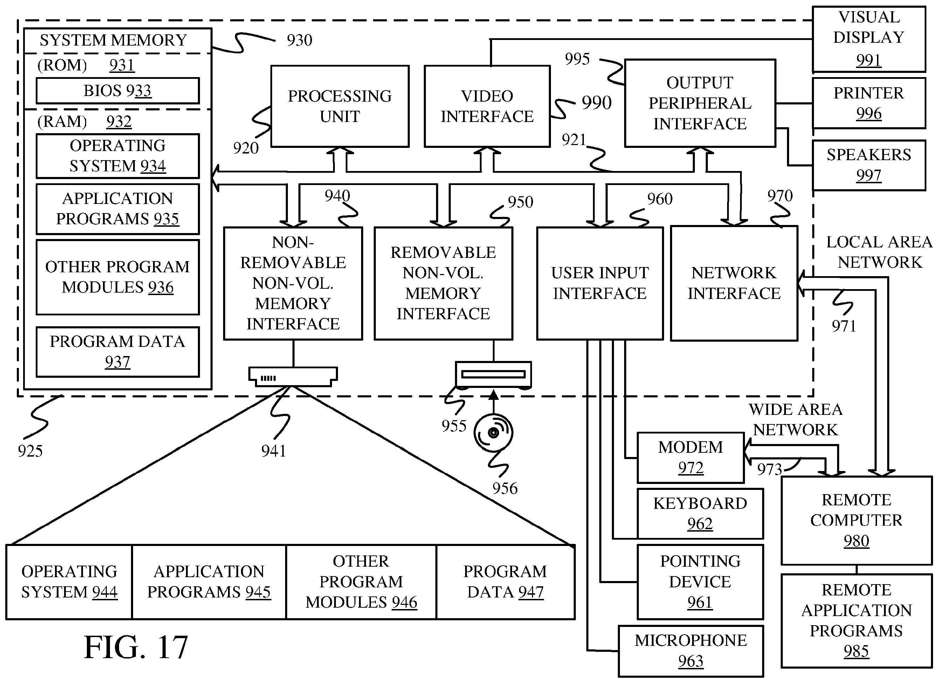

FIG. 17 is one example of a computing environment in which elements of FIG. 4 can be deployed. With reference to FIG. 17, an example system for implementing some embodiments includes a computing device in the form of a computer 925 programmed to operate as discussed above. Components of computer 925 may include, but are not limited to, a processing unit 920 (which can comprise processors or servers from previous FIGS.), a system memory 930, and a system bus 921 that couples various system components including the system memory to the processing unit 920. The system bus 921 may be any of several types of bus structures including a memory bus or memory controller, a peripheral bus, and a local bus using any of a variety of bus architectures. Memory and programs described with respect to FIG. 4 can be deployed in corresponding portions of FIG. 17.

Computer 925 typically includes a variety of computer readable media. Computer readable media may be any available media that can be accessed by computer 925 and includes both volatile and nonvolatile media, removable and non-removable media. By way of example, and not limitation, computer readable media may comprise computer storage media and communication media. Computer storage media is different from, and does not include, a modulated data signal or carrier wave. Computer readable media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 925. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 930 includes computer storage media in the form of volatile and/or nonvolatile memory or both such as read only memory (ROM) 931 and random access memory (RAM) 932. A basic input/output system 933 (BIOS), containing the basic routines that help to transfer information between elements within computer 925, such as during start-up, is typically stored in ROM 931. RAM 932 typically contains data or program modules or both that are immediately accessible to and/or presently being operated on by processing unit 920. By way of example, and not limitation, FIG. 17 illustrates operating system 934, application programs 935, other program modules 936, and program data 937.

The computer 925 may also include other removable/non-removable volatile/nonvolatile computer storage media. By way of example only, FIG. 17 illustrates a hard disk drive 941 that reads from or writes to non-removable, nonvolatile magnetic media, an optical disk drive 955, and nonvolatile optical disk 956. The hard disk drive 941 is typically connected to the system bus 921 through a non-removable memory interface such as interface 940, and optical disk drive 955 are typically connected to the system bus 921 by a removable memory interface, such as interface 950.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 17, provide storage of computer readable instructions, data structures, program modules and other data for the computer 925. In FIG. 17, for example, hard disk drive 941 is illustrated as storing operating system 944, application programs 945, other program modules 946, and program data 947. Note that these components can either be the same as or different from operating system 934, application programs 935, other program modules 936, and program data 937.

A user may enter commands and information into the computer 925 through input devices such as a keyboard 962, a microphone 963, and a pointing device 961, such as a mouse, trackball or touch pad. Other input devices (not shown) may include a joystick, game pad, satellite dish, scanner, or the like. These and other input devices are often connected to the processing unit 920 through a user input interface 960 that is coupled to the system bus, but may be connected by other interface and bus structures. A visual display 991 or other type of display device is also connected to the system bus 921 via an interface, such as a video interface 990. In addition to the monitor, computers may also include other peripheral output devices such as speakers 997 and printer 996, which may be connected through an output peripheral interface 995.

The computer 925 is operated in a networked environment using logical connections (such as a controller area network - CAN, local area network - LAN, or wide area network WAN) to one or more remote computers, such as a remote computer 980.

When used in a LAN networking environment, the computer 925 is connected to the LAN 971 through a network interface or adapter 970. When used in a WAN networking environment, the computer 925 typically includes a modem 972 or other means for establishing communications over the WAN 973, such as the Internet. In a networked environment, program modules may be stored in a remote memory storage device. FIG. 17 illustrates, for example, that remote application programs 985 can reside on remote computer 980.

It should also be noted that the different examples described herein can be combined in different ways. That is, parts of one or more examples can be combined with parts of one or more other examples. All of this is contemplated herein.

## Claims

1. An agricultural harvesting system (300) comprising:
an in-situ crop height sensor (380) configured to detect a crop height value indicative of a height of crop at the field;
an in-situ cut height sensor (382) configured to detect a cut height value indicative of a height of a cutter of an agricultural harvester (100) above a surface of the field; and
a control system (314) configured to:
identify a value, indicative of an ideal cutting table position in a fore-and-aft direction, based on the detected crop height value and the detected cut height value and based on a relationship (318, 311); and
generate a control signal to control a cutting table subsystem (340) of the agricultural harvester based on the identified value indicative of the cutting table position;
**characterized in that** the harvesting system (300) comprises:
an in-situ cutting table control input sensor (390) configured to detect a cutting table control input value in form of an operator input into an operator input mechanism (218), the cutting table control input value indicative of the cutting table position corresponding to a geographic location; and
a model generator (310) configured to generate, as the relationship (318, 311), a cutting table control input model (2450, 4451) that models a relationship between values of crop height, values of cut height, and cutting table control input values, based on the cutting table control input value, detected by the in-situ cutting table control input sensor (390), corresponding to the geographic location, an obtained crop height value corresponding to the geographic location, and an obtained cut height value corresponding to the geographic location, the cutting table control input model configured to generate, as the value indicative of the cutting table position, a cutting table control input value based on the obtained crop height value and the obtained cut height value.

2. The agricultural harvesting system of claim 1, wherein the obtained cut height value is obtained from the in-situ cut height sensor (382).

3. The agricultural harvesting system of claim 1 and further comprising:
a predictive map generator (310) configured to:
obtain a crop height map (431, 460) that maps crop height values to different geographic locations in the field;
obtain a cut height map (358, 434) that maps cut height values to different geographic location in the field; and
generate a functional predictive cutting table control input map (2460, 4470) that maps predictive cutting table control input values to different geographic locations in the field based on the crop height map and the cut height map and the predictive cutting table control input model.

## Patentansprüche

1. Landwirtschaftliches Erntesystem (300), das Folgendes umfasst:
einen In-Situ-Ernteguthöhensensor (380), der konfiguriert ist, einen Ernteguthöhenwert, der eine Höhe des Ernteguts auf dem Feld anzeigt, zu detektieren;
einen In-Situ-Schnitthöhensensor (382), der konfiguriert ist, einen Schnitthöhenwert, der eine Höhe einer Schneidvorrichtung eines landwirtschaftlichen Erntefahrzeugs (100) oberhalb einer Oberfläche des Feldes anzeigt, zu detektieren; und
ein Steuersystem (314), das konfiguriert ist zum:
Identifizieren eines Werts, der eine ideale Schneidtischposition in einer Längsrichtung anzeigt, basierend auf dem detektierten Ernteguthöhenwert und dem detektierten Schnitthöhenwert und basierend auf einer Beziehung (318, 311); und
Erzeugen eines Steuersignals, um ein Schneidtisch-Untersystem (340) des landwirtschaftlichen Erntefahrzeugs basierend auf dem identifizierten Wert, der die Schneidtischposition anzeigt, zu steuern;
**dadurch gekennzeichnet, dass** das Erntesystem (300) Folgendes umfasst:
einen In-Situ-Schneidtisch-Steuerungseingabesensor (390), der konfiguriert ist, einen Schneidtisch-Steuerungseingabewert in Form einer Bedienereingabe in einen Bedienereingabemechanismus (218) zu detektieren,
wobei der Schneidtisch-Steuerungseingabewert die Schneidtischposition entsprechend einem geographischen Ort anzeigt; und
einen Modell-Generator (310), der konfiguriert ist, als die Beziehung (318, 311) ein Schneidtisch-Steuerungseingabemodell (2450, 4451) zu erzeugen, das eine Beziehung zwischen Werten der Ernteguthöhe, Werten der Schnitthöhe, und Schneidtisch-Steuerungseingabewerten modelliert, basierend auf dem Schneidtisch-Steuerungseingabewert, der durch den In-Situ-Schneidtisch-Steuerungseingabesensor (390) detektiert wird, entsprechend dem geographischen Ort,
einem erhaltenen Ernteguthöhenwert entsprechend dem geographischen Ort und einem erhaltenen Schnitthöhenwert entsprechend dem geographischen Ort, wobei das Schneidtisch-Steuerungseingabemodell konfiguriert ist,
basierend auf dem erhaltenen Erntegut-Höhenwert und dem erhaltenen Schnitthöhenwert, einen Schneidtisch-Steuerungseingabewert als den Wert, der die Schneidtischposition anzeigt, zu erzeugen.

2. Landwirtschaftliches Erntesystem nach Anspruch 1, wobei der erhaltene Schnitthöhenwert von dem In-Situ-Schnitthöhensensor (382) erhalten wird.

3. Landwirtschaftliches System nach Anspruch 1, das ferner Folgendes umfasst:
einen Generator (310) für prädiktive Karten, der konfiguriert ist zum:
Erhalten einer Ernteguthöhenkarte (431, 460), die Ernteguthöhenwerte auf unterschiedliche geographische Orte auf dem Feld abbildet;
Erhalten einer Schnitthöhenkarte (358, 434), die Schnitthöhenwerte auf unterschiedliche geographische Orte auf dem Feld abbildet; und
Erzeugen einer funktionellen prädiktiven Schneidtischsteuerungseingabekarte (2460, 4470), die prädiktive Schneidtischsteuerungseingabewerte auf unterschiedliche geographische Orte auf dem Feld abbildet, basierend auf der Ernteguthöhenkarte und der Schnitthöhenkarte und dem prädiktiven Schneidtischsteuerungseingabemodell.

## Revendications

1. Système (300) de récolte agricole comportant :
un capteur in-situ (380) de hauteur de culture configuré pour détecter une valeur de hauteur de culture indicative d'une hauteur de culture dans le champ ;
un capteur in-situ (382) de hauteur de coupe configuré pour détecter une valeur de hauteur de coupe indicative d'une hauteur d'un organe de coupe d'une récolteuse agricole (100) au-dessus d'une surface du champ ; et
un système (314) de commande configuré pour :
identifier une valeur, indicative d'une position idéale de table de coupe dans une direction avant-arrière, d'après la valeur détectée de hauteur de culture et la valeur détectée de hauteur de coupe et sur la base d'une relation (318, 311) ; et
générer un signal de commande pour commander un sous-système (340) de table de coupe de la récolteuse agricole d'après la valeur identifiée indicative de la position de table de coupe ;
**caractérisé en ce que** le système (300) de récolte comporte :
un capteur in-situ (390) d'entrée de commande de table de coupe configuré pour détecter une valeur d'entrée de commande de table de coupe sous la forme d'un entrée d'opérateur dans un mécanisme (218) d'entrée d'opérateur, la valeur d'entrée de commande de table de coupe étant indicative de la position de table de coupe correspondant à un emplacement géographique ; et
un générateur (310) de modèles configuré pour générer, en tant que relation (318, 311), un modèle (2450, 4451) d'entrée de commande de table de coupe qui modélise une relation entre des valeurs de hauteur de culture, des valeurs de hauteur de coupe et des valeurs d'entrée de commande de table de coupe, sur la base de la valeur d'entrée de commande de table de coupe, détectée par le capteur in-situ (390) d'entrée de commande de table de coupe, correspondant à l'emplacement géographique, une valeur obtenue de hauteur de culture correspondant à l'emplacement géographique, et une valeur obtenue de hauteur de coupe correspondant à l'emplacement géographique, le modèle d'entrée de commande de table de coupe étant configuré pour générer, en tant que valeur indicative de la position de table de coupe, une valeur d'entrée de commande de table de coupe d'après la valeur obtenue de hauteur de culture et la valeur obtenue de hauteur de coupe.

2. Système de récolte agricole selon la revendication 1, la valeur obtenue de hauteur de coupe étant obtenue à partir du capteur in-situ (382) de hauteur de coupe.

3. Système de récolte agricole selon la revendication 1 et comportant en outre :
un générateur (310) de carte prédictive configuré pour :
obtenir une carte (431, 460) de hauteur de culture qui associe des valeurs de hauteur de culture à différents emplacements géographiques dans le champ ;
obtenir une carte (358, 434) de hauteur de coupe qui associe des valeurs de hauteur de coupe à différents emplacements géographiques dans le champ ; et
générer une carte prédictive fonctionnelle (2460, 4470) d'entrée de commande de table de coupe qui associe des valeurs prédictives d'entrée de commande de table de coupe à différents emplacements géographiques dans le champ d'après la carte de hauteur de culture et la carte de hauteur de coupe et le modèle prédictif d'entrée de commande de table de coupe.
